# EUROPEAN PATENT SPECIFICATION

(11) **EP 1 569 512 B1**
(45) Date of publication and mention of the grant of the patent: **28.02.2007**
(21) Application number: 03767960.2
(22) Date of filing: 05.12.2003
(51) Int. Cl.: A01N 25/04, A01N 25/10

(54) **PARTICULATE SUSPENSIONS**
TEILCHEN-SUSPENSIONEN
SUSPENSIONS DE PARTICULES

(30) Priority: 06.12.2002 GB 0228537
(43) Date of publication of application: 07.09.2005
(73) Proprietor: Syngenta Limited, Guildford Surrey GU2 7YH (GB)
(72) Inventor: HEMING, Alexander Mark, Syngenta Limited, Bracknell, Berks RG42 6EY (GB); SHIRLEY, Ian Malcolm, Syngenta Limited, Bracknell, Berks RG42 6EY (GB); WINN, Peter David, Syngenta Limited, Bracknell, Berks RG42 6EY (GB)
(74) Representative: Osborn, Martin Keith
(86) International application number: PCT/GB2003/005291
(87) International publication number: WO 2004/052099

(56) References cited:
- EP-A- 0 007 731
- US-B1- 6 262 152

## Description

This invention relates to particulate suspensions and in particular to the use of reactive polymeric surfactants for the stabilisation of particulate suspensions.

EP-A-0 007 731 describes the stabilisation of suspensions of hydrophobic pesticide particles with co-polymers comprising hydrophobic and hydrophilic groups, It is not suggested to further crosslink such co-polymers with the aid of suitable additional groups and agents.

In US 6262152 there is described a dispersion of solid particles which comprises (a) a liquid vehicle such as water or organic solvents; (b) particles that are at least substantially insoluble in the liquid vehicle; (c) a polymer dispersant having at least one segment soluble in the liquid vehicle and at least one segment insoluble in the liquid vehicle said insoluble segment having cross-linkable moieties; and (d) wherein the cross-linkable moieties on the insoluble segment of the polymer dispersant are cross-linked such that the insoluble segment of the polymer dispersant forms a cross-linked polymer with the particles entrapped therein. It is stressed that the particle is entrapped in a network formed by the insoluble polymer segment and the cross-linking bonds and that such bonds are very stable and effectively prevent the particle from leaving the "core" formed by the polymer. Examples of suitable particles are stated to include pigments, insoluble dyes, metallic particles, biologically active compounds, pharmaceutically active compounds, polymer particles, hollow glass spheres etc. The Examples disclose pigments "encapsulated" within various cross-linked polymers. In each case the dispersion contains 15% pigment and 10% polymer by weight prior to cross-linking. The only disclosure of the preferred ratio of polymer to pigment is that given in the Examples and it is clearly intended that the pigment particles are "entrapped" or "encapsulated" within the "core" of a substantial body of polymeric material as reflected by the ratio of pigment to polymer used in the examples. Such "entrapment" within the "network" or "matrix" around the particle is necessary to prevent it from leaving the "core" formed by the cross-linked polymer.

Despite the teaching of US 6262152 we have found that effective stabilisation of insoluble particles may be achieved using cross-linked polymers at greatly reduced concentrations as compared with those disclosed in US 6262152. Such reduced concentrations of polymer are particularly suitable for use with a dispersion of an agrochemical active ingredient in an aqueous medium and in particular an aqueous medium containing substantially no organic solvent. US 6262152 is primarily concerned with the stabilisation of suspensions of pigments such as toners. Such materials are highly insoluble in both water and organic solvents and in particular are insoluble in an aqueous medium containing an organic solvent. Thus US 6262152 is able to use an aqueous medium containing organic solvent as the aqueous phase in which the particulate material is suspended. Such systems are not possible for agrochemical active ingredients since they tend to be at least partially soluble in an aqueous medium containing organic solvent. Such systems therefore tend to increase problems of crystal growth. The use of an aqueous medium containing substantially no miscible organic solvent limits the type of polymeric surfactant that can be used since highly hydrophobic surfactants will be insufficiently soluble in an aqueous medium containing substantially no miscible organic solvent. The use of agrochemicals therefore presents problems that are not encountered for pigments such as toners. Furthermore toners and pigments are used in a very fine dispersion and are generally milled to sub-micron proportions ("a uniform, transparent, water-borne pigment dispersion"). Clearly the requirements to "encapsulate" such fine particles in a "matrix" of cross-linked polymer will be very different from those needed to stabilise much larger particles (typically 1 to 10 microns) encountered in agrochemical suspensions.

Thus according to the present invention there is provided a method of enhancing the stability of a particulate suspension comprising an aqueous phase containing substantially no miscible organic solvent having suspended therein an agrochemical solid substantially insoluble in said aqueous phase which comprises
(i) forming a polymeric stabiliser having a hydrophilic moiety and a hydrophobic moiety by polymerising a plurality of vinylic monomers, not being exclusively vinylic esters or their hydrolysed products, at least some of which contain functional groups capable of undergoing cross-linking reactions and
(ii) reacting said polymeric stabiliser with one or more substances contained (dissolved or suspended) in the aqueous phase capable of undergoing a cross-linking reaction with said functional groups,
wherein the ratio by weight of (a) the polymeric stabiliser prior to cross-linking to (b) the suspended agrochemical is less than 1 part of polymeric stabiliser per 5 parts of suspended agrochemical.

A small proportion of a miscible organic solvent may if desired be added once the suspension has been prepared. For example propylene glycol may be added as an anti-freeze. The term "an aqueous phase containing substantially no miscible organic solvent" as used herein indicates that any minor proportion of organic solvent that may be present is at a low concentration such that the solubility of the agrochemical in the aqueous phase is not adversely increased and such that problems such as crystallisation of the agrochemical are not encountered.

Preferably the solid is milled or otherwise dispersed in the presence of the aqueous phase and the polymeric stabiliser prior to step (ii).

The polymeric stabilisers used in this invention thus have three moieties - a hydrophilic moiety, a hydrophobic moiety and a moiety that possesses reactive or cross-linking ability with respect to the one or more substances contained in the aqueous phase of the suspension and capable of undergoing a cross-linking reaction with said functional group. They thus function as reactive polymeric surfactants. The respective moieties are derived from one or more of the corresponding vinylic monomers used to form the polymeric stabiliser.

According to a further aspect of the present invention there is provided a particulate suspension comprising a liquid phase having suspended therein a solid substantially insoluble in said liquid phase wherein the suspension is stabilised by the reaction product of
(i) a polymeric stabiliser having a hydrophilic moiety and a hydrophobic moiety and comprising a plurality of vinylic monomers, not being exclusively of vinylic esters or of their hydrolysed products, at least some of which contain functional groups capable of undergoing cross-linking nucleophilic or condensation reactions and
(ii) one or more substances contained in the liquid phase capable of undergoing a cross-linking reaction with said functional groups
wherein the ratio by weight of (a) the polymeric stabiliser prior to cross-linking to (b) the suspended solid is less than 1 part of polymeric stabiliser per 5 parts of suspended solid.

The ratio by weight of (a) the polymeric stabiliser prior to cross-linking to (b) the suspended solid is preferably from 1 part of polymeric stabiliser to 400 parts of suspended solid (1:400) to 1 part of polymeric stabiliser per 5 parts of suspended solid (1:5), for example from 1 part of polymeric stabiliser to 200 parts of suspended solid (1:200) to 1 part of polymeric stabiliser per 10 parts of suspended solid (1:10). An especially preferred range is from 1:10 to 1:100, for example from 1:20 to 1:75. A ratio of about 1:50 is especially preferred.

The suspended solid is an agrochemical active ingredient. In view of the teaching of US 6262152 it is surprising that satisfactory particulate suspensions may be obtained using low levels of polymeric stabiliser according to the present invention. We have found that cross-linking of the polymeric stabiliser is still sufficient to "lock" it irreversibly to the surface of the suspended solid without the need to provide a substantial "encapsulating" layer in the form of a "network" to "trap" the solid particle. There is a clear economic advantage in reducing the quantity of polymeric stabiliser used in the formulation. Furthermore, we have found that reducing the quantity of polymeric stabiliser may minimise the unproductive cross-linking of the polymeric stabiliser by reaction with the cross-linking agent in the body of the aqueous phase as opposed to on the particle surface. Whilst the cross-linking may have the effect of slightly increasing the overall particle size in the suspension, in general this effect, if it exists at all, is relatively small. We have found that surprisingly the average particle size in the suspension normally remains well within preferred limits, for example below about 10 microns and more particularly below about 5 microns even after cross-linking. In contrast to the pigments that are the primary subject of US 6262152, certain agrochemicals have a small but finite solubility in the aqueous phase. This may have adverse consequences for agrochemicals that are able to undergo an alteration of physical state, such as crystallisation. In particular, suspension concentrates of agrochemicals may become destabilised by a mechanism that involves transport of agrochemical into the aqueous phase where the agrochemical may crystallise to form particles, which by virtue of size or shape may adversely affect the robustness and the bioperformance of the formulation. We have found that the process of the present invention may prevent or mitigate destabilisation of suspension concentrates of agrochemicals by this mechanism. Without being bound by any one particular theory, it is believed that, in contrast to the process of US 6262152 which "encapsulates" the particles in a "matrix" of cross-linked polymeric material, the process of the present invention initially involves the adsorption of the hydrophobic moiety of the water-soluble polymeric stabiliser onto the surface of the suspended agrochemical particle. Thereafter, cross-linking effectively increases the hydrophobic nature of the hydrophobic unit in-situ. This has the effect of greatly reducing displacement of polymeric surfactant from the particle surface and thereby increases the stability of the dispersion. Increasing the hydrophobic nature of the polymeric surfactant in-situ has the advantage that the polymeric stabiliser is soluble in an aqueous medium containing no miscible organic solvent and the hydrophobic nature is only increased (by cross-linking) after adsorption to the particle surface has taken place. Furthermore, it is believed that in the process of the present invention the cross-linked polymeric surfactant is present more in the nature of a molecular mono-layer than a substantial matrix of cross-linked polymeric material which encapsulates the suspended solid.

Typical examples of agrochemicals that are substantially insoluble in water and are formulated as aqueous suspension concentrates include, but are not restricted to abamectin, acrinathrin, ametryn, atrazine, azoxstrobin, benzobicylon, benzofencap, benzsulfuran-methyl, bromoconazole, captan, carbendazim, chlorfenapyr, chlorothalonil, cyazofamid, cyfluthrin, desmedipham, diafenthiuron, dicamba, difenoconazole, diflufenican, dithianon, emamectin benzoate, epoxyconazole, ethofumesate, famoxadone, fenazaquin, fenamidone, fenbuconazole, fenhexamid, fentrazamide, fipronil, florasulam, fluazinam, fluometuron, fluquinconazole, flusulfamide, flutriafol, halofenozide, hexaconazole, imidacloprid, iprodione, kresoxim-methyl, mancozeb, mepanipyrim, mesotrione, methoxyfenozide, metosulam, milbemectin, napropamide, nicosulfuron, ofurace, pencycuron, pendimethalin, phenmedipham, picoxystrobin, phthalide, prothioconazole, pyraclostrobin, pyrazophos, pyrimethanil, quinoxyfen, simazine, spinosad, spirodiclofen, sulcotrione tebuconazole, tebufenozide, terbuthylazine, thiabendazole, thiacloprid, thiamethoxam, tralkoxydim triticonazole, cyprodinil, prodiamine, butafenacil, glyphosate acid and ACCase inhibitors such as those disclosed in European patent no 1 062 217.

In one embodiment of the present invention the suspended agrochemical is present as a suspension concentrate. The scope of the present invention is not however limited to simple suspension concentrate formulations and includes for example suspoemulsions in which a suspension concentrate containing one or more agrochemicals suspended in the aqueous phase is formulated with an oil-in-water emulsion comprising one or more agrochemicals contained in a dispersed oil phase. The reactive polymeric surfactant will be cross-linked to stabilise the suspended solid particle in accordance with the present invention and may in addition stabilise the dispersed phase of the emulsion in accordance with our copending application PCT/GB02/02744. It is a particular advantage that effectively the same surfactant may be used to stabilise both the suspended solid and the dispersed emulsion phase, even if in one instance it is cross-linked and in the other it is not. It is to be understood that references herein to "an aqueous phase containing substantially no miscible organic solvent" does not exclude such suspoemulsions.

The polymeric stabilisers used in this invention have three moieties - a hydrophilic moiety, a hydrophobic moiety and a moiety that possesses reactive or cross-linking ability with respect to the one or more substances contained in the aqueous phase of the suspension and capable of undergoing a cross-linking reaction with said functional group. They thus function as reactive polymeric surfactants. When these surfactants are used with a particulate solid dispersed in a predominantly aqueous medium the hydrophobic moiety adsorbs strongly to the surface of the particulate solid while the hydrophilic moiety associates strongly with the aqueous medium, thereby conferring colloidal stability upon the suspended solid. The cross-linking moieties enable the surfactant to become cross-linked by reaction with the cross-linking substance contained (dissolved or suspended) in the aqueous phase, while the colloid stabilizing moieties of the surfactant provide surface-active properties to the thus cross-linked entity.

The polymeric stabilisers (surfactants) for use in this invention are selected from certain random graft or comb copolymers and certain block copolymers. It should be noted that the random graft or comb copolymers and block copolymers for use in the present invention are surfactants in their own right which are then bound at the particle interface by reaction of the cross-linking moiety.

The properties of these surface active agent materials are determined by the composition and quantity of their hydrophobic and hydrophilic components.

The compositions and methods of preparation of polymeric surfactants are many and varied. A review of such materials is given in the text by Piirma: Polymeric Surfactants, Surfactant Science Series 42, (Marcel Dekker, New York, 1992). The two main classes of polymeric surfactants are those prepared as hydrophilic-hydrophobic blocks and those prepared as combs of hydrophilic arms attached to a hydrophobic backbone, and vice versa. Such hydrophobic-hydrophilic polymers have been termed "amphipathic" or "amphiphilic". Adsorption to the suspended solid is maximised where the surfactants have a high propensity to adsorb on the solid surface and have little or no propensity to micellise or otherwise separate in the continuous phase.

In general, polymeric surfactants may be made by modifying previously prepared polymers or by polymerisation in a single step or stepwise manner. Thus as used herein the term "forming a polymeric stabiliser having a hydrophilic moiety and a hydrophobic moiety by polymerising a plurality of vinylic monomers, not being exclusively vinylic esters or their hydrolysed products, at least some of which contain functional groups capable of undergoing cross-linking nucleophilic or condensation reactions" includes both direct polymerisation and polymerisation followed by modification of the polymer thus formed.

For example block co-polymers can be made by (i) the controlled stepwise polymerisation of firstly hydrophobic and secondly hydrophilic monomers, or the reverse of this process, or by (ii) coupling together pre-formed hydrophobic and hydrophilic materials of suitable molecular weight.

Polymers used in the present invention may be made from monomers by a number of polymerisation mechanisms well known in the art. Polymerisation, and in particular radical polymerisation, proceeds in three stages: (i) *Initiation,* when the active centre which acts as chain carrier is created; (ii) *Propagation,* which involves the repeated addition of a monomer to the growing polymer chain; (iii) *Termination,* whereby the chain is brought to a halt by the neutralisation or transfer of the active centre. One skilled in the art is well aware of a range of suitable initiation and termination processes whilst specific initiators and terminators are exemplified in the specification.

Block copolymers may be prepared from monomers by methods known in the art. Such methods include either anionic or group transfer polymerisation methods that give fine control over molecular weights, poly-dispersities (PDi) and polymer architecture. Preparative conditions for these methods are very demanding and require for example low polymerisation temperatures, the use of rigorously anhydrous solvents, and extremely pure reagents. In addition, the use of functional monomers often requires employment of protecting group chemistry. These factors have limited the widespread commercial exploitation of the technologies.

Block copolymers are not easily prepared by 'conventional' radical polymerisation technology. Such technology has been extensively exploited due in part to the availability of a broad range of monomers and functionalities, and to the robustness of the technique that tolerates a wide range of operating conditions. Polymerisation may be done in both organic and aqueous media. However limitations on the conventional technology when used for the preparation of block copolymers are imposed by the difficulty in controlling product architecture and the lack of selectivity of radical reactions. The limitations are reduced or eliminated in controlled radical polymerisation (CRP) methods. Several such CRP methods are known, including those mediated by metal, sulphur and nitroxide chemistries. Atom transfer radical polymerisation (ATRP) is an example of CRP mediated by metal chemistry.

We have found that ATRP, a process which allows precise control over the polymer composition and molecular weight, is particularly useful for preparing both block and random graft or comb reactive polymeric surfactants for use at relatively low concentration in the present invention. This method is tolerant of monomer type and may be used for example for both styrene and (meth)-acrylic type monomers. ATRP is also tolerant of impurities in reagents and the presence of water. Furthermore the use of functional monomers often does not require protection/deprotection chemistry. The resultant polymers generally provide suspensions of solid particles with lower average particle size after milling for a set time and with greater robustness toward irreversible aggregation when the polymer is used at lower concentration compared with polymers prepared using techniques such as those disclosed in US 6262152. Such polymers made by controlled radical polymerisation generally have narrower polydispersities than comparable polymers made by non-living radical methods.

One system for carrying out ATRP is described by Coca et al in J Polym Sci: Part A Polym Chem, Vol 36,1417-1424 (1998) "ATRP employs a Cu(I) halide, which is complexed with ligands (often bidentate), to form a "CuX/2L" complex. Halogenated initiators are used for polymerisation. The Cu(I) complex reversibly activates dormant polymer chains (and the initiator) by transfer of the halogen end groups as shown in Scheme 1."

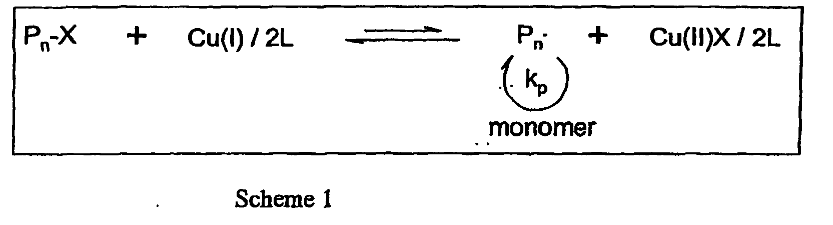

Random graft or comb copolymers can be made by (i) graft polymerisation of hydrophilic monomers or macromonomers to a hydrophobic backbone, or the reverse of this process, or by (ii) coupling pre-formed hydrophobic or hydrophilic materials of suitable molecular weight to a polymer backbone which is a hydrophilic or hydrophobic backbone, respectively or by (iii) randomly copolymerising macromonomers that have hydrophilic pendant chains with hydrophobic monomers or copolymerising hydrophobic macromonomers with hydrophilic monomers.

The preferred preparative method for any given composition will depend on the nature and properties of the starting materials. For example, the reactivity ratios between certain monomers may limit the amount of a particular hydrophilic monomer that can be radically co-polymerised with hydrophobic monomers and visa versa.

In one embodiment, the polymeric stabilisers for use in this invention contain two types of units: a) hydrophobic units, which themselves contain cross-linking moieties; and b) hydrophilic units which provide colloid stabilizing and other surface-active properties. The polymeric stabilisers for use in this invention generally comprise two types, namely random graft or comb copolymers and block copolymers.

The polymeric stabilisers for use in this invention are composed of a plurality of vinylic monomers. Some of these, as discussed below, contain functional groups ("cross-linking groups") that are capable of undergoing a reaction with moieties or groups present in a variety of materials contained in the aqueous phase.

The random graft or comb copolymers have a hydrophobic "backbone" and hydrophilic "arms" whereas the block copolymers have hydrophobic and hydrophilic segments in which the hydrophobic segment contains the cross-linking element.

The reactive polymeric surfactants for use in the present invention may contain more than one type of monomer capable of undergoing a cross-linking reaction. For example the copolymers may comprise both amine and carboxylic acid containing monomers. The copolymers may alternatively comprise both hydroxyl and carboxylic acid containing monomers.

The polymeric stabilisers for use in this invention may be made as known in the art either by modifying previously prepared polymers or by production through polymerization in a single step or in a stepwise manner.

The reactive polymeric surfactants for use in this invention that include both random graft or comb copolymers, and block copolymers, may be represented by the general formula (I): 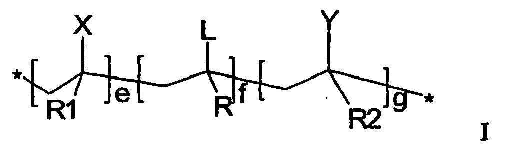 wherein one * represents the residue of an initiator group and the other * represents the residue of a terminator group; R1, R and R2 are independently H or methyl; X is a hydrophilic moiety; L is a moiety containing a cross-linking group; Y is a hydrophobic moiety; the value of e is from 0 to 0.8, for example from 0.005 to 0.8 and in particular from 0.005 to 0.35 ; the value of f is from 0.01 to 0.4 for example from 0.05 to 0.4 and the value of g is from 0.10 to 0.90 and e + f + g equals 1, provided that when e is 0, * represents the residue of a hydrophilic initiator.

For convenience the group 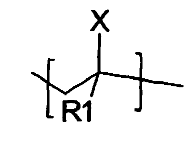 in formula (I) is referred to herein as group or unit E, the group 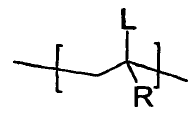 in formula (I) is referred to herein as group or unit F and the group 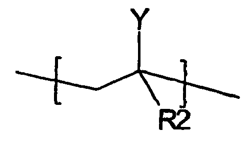 in formula (I) is referred to herein as group or unit G. It will be appreciated that units E, F, and G are each derived from the corresponding vinylic monomer and each unit type E, F and G may comprise one or more different monomers.

When the surfactant is a random graft or comb copolymer, the units E, F and G are randomly distributed. The random graft or comb copolymers suitably have a hydrophobic "backbone" and hydrophilic "arms". When the surfactant is a block copolymer the units F and G are contained in a hydrophobic block and the units E are contained in one or more hydrophilic blocks. The units F and G may be disposed in random fashion within the hydrophobic block or may be disposed as blocks of units F and G respectively within the hydrophobic block.

When R1, R and R2 respectively are hydrogen, the corresponding monomer is an acrylate monomer and when R1, R and R2 respectively are methyl, the corresponding monomer is a methacrylate monomer. A substituted styrene monomer has R1 as H and X as a hydrophilically substituted phenyl derivative for the unit E, and has R1 as H and L as a phenyl derivative substituted with a cross-linking group for the unit F and has R1 as H and Y as a phenyl derivative substituted with a hydrophobic group for the unit G. The values of e, f and g are determined essentially by the ratios of the monomers reacting to form the units E, F and G respectively such that the sum of e + f + g equals 1.

It is well known to those skilled in the art that the nature of the initiator and terminator residues "*" in Figure (I) will depend on the type ofpolymerisation process used to prepare the polymer. For the purpose of illustration only where a conventional free radical initiator such as benzoyl peroxide or azobisisobutyronitrile is used the initiating group residue "*" will be benzoyl or (CH₃)₂C(CN)- respectively. Where termination occurs by disproportionation the end group "*" may represent a hydrogen atom. If termination is by combination the end group "*" may represent a further polymer chain. When an atom transfer radical polymerisation process (ATRP), is used the residue of the initiating group "*" may be a hydrophobic residue, for example C₂H₅OOC-C(CH3)2- or a hydrophilic residue. A typical hydrophilic initiator in an ATRP process has the formula II 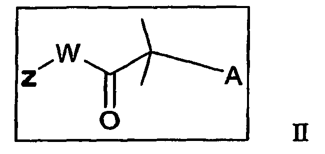 wherein A is a group such as halogen, for example bromine or chlorine that under certain conditions, such as in the presence of a transition metal complex, may be activated such that vinylic monomer units are inserted into the carbon-A bond, Z is a hydrophilic group such as a C₁ to C₄ alkoxy polyethylene glycol or phenyloxy polyethylene glycol group with a DPn of 5-200 or a molecular weight of 350 to 10,000 and preferably from 350 to 4000 and -W- is -O-or -NA- wherein A is hydrogen or C₁ to C₄ alkyl. Z is preferably a methoxypolyethene glycol group and -W- is preferably -O-. The residue of the hydrophilic initiator group ("*") thus takes the form

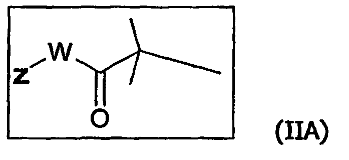

Depending on the method of surfactant preparation other water-soluble polymers may be used in place of the preferred hydrophilic initiator when present. Thus Z may alternatively be poly(acrylamide), poly(vinyl pyrrolidone) ("PVP") or poly(methyl vinyl ether). Initiators for the preparation of such "hydrophiles" may be made by polymerising monomers of said polymers in the presence of a xanthogen chain-terminating agent as described in European Patent Application EP 161502 (to DeSOTO Inc). The reagent bis(4-hydroxybutyxanthogen) disulphide [HO-(CH2-R-CH2)-O-C(=S)-SS-C(=S)-O-(CH2-R-CH2)-OH] introduces HO-(CH2-R-CH2)-O-C(=S)-S- end groups on the hydrophilic polymer. The end group may be reacted with BrCOC(CH3)2Br to give an initiator of the type described by Formula II, where W is oxygen and Z comprises the hydrophilic polymer terminating in -S-C(=S)-O-(CH2-R-CH2)-O-COC(CH3)2Br.

It will be appreciated that the presence of the hydrophilic group Z in the residue of the initiator species may provide sufficient hydrophilic properties such that no group E is required (i.e. the value of e is zero). The reactive polymeric surfactant of formula (I) will then take form of formula (III) below in which * represents a terminator group. Alternatively, the reactive polymeric surfactant of formula (I) may contain both the residue of a hydrophilic initiator and a group E.

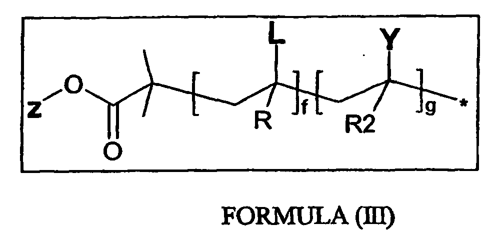

In Figure (I), the initiator is drawn as initiating the polymer at one or more of the units E. In practice however the initiator and terminator functions may initiate and terminate the polymer at any of the units E, F or G and Figure (I) is not to be regarded as limiting in this respect. Indeed in a random graft or comb copolymer, the units are in any event arranged in a random manner. In a block copolymer the initiator, for example the hydrophilic initiator may be joined either (a) to the hydrophilic block E (if present) which is in turn joined to the hydrophobic block (comprising units F and G) or (b) may be joined directly to the hydrophobic block (comprising units F and G) if there is no hydrophilic block or (c) may be jointed to one end of the hydrophobic block (comprising Units F and G) which in turn is joined to a block of Units E.

It is preferred that in formula (I):
(i) the group E preferably corresponds to (i.e. is derived from) one or more methacrylate monomers (when R1 is methyl and -X is the appropriate hydrophilic derivative function) or corresponds to an acrylate monomer (when R1 is hydrogen and -X is the appropriate hydrophilic derivative function) or is a styrene derivative (when R1 is hydrogen and X is phenyl substituted with a hydrophilic moiety). It is preferred that the group -X is or carries a hydrophilic moiety X' selected from -SO₃^{-,} polyethylene glycol optionally end-capped with C1-C4 alkyl; -COOH or a salt thereof; carboxybetaine; sulfobetaine; and a quaternary ammonium salt -N⁺R³₃C⁻ wherein each R³ is independently H or C1-C4 alkyl or - CH₂CH₂OH and
(ii) the group F preferably corresponds to (i.e. is derived from) one or more methacrylate monomers (when R1 is methyl and -L is the appropriate derivative function carrying a cross-linking group) or corresponds to an acrylate monomer (when R1 is hydrogen and -L is the appropriate derivative function carrying a cross-linking group) or is a styrene derivative (when R1 is hydrogen and L is phenyl substituted with a moiety providing the cross-linking function). It is preferred that the group -L is or carries a cross-linking group L' selected from -OH, including for example polypropylene glycol; -SH, -NHA where A is hydrogen or C₁ to C₄ alkyl; and -COOH or a salt thereof; and
(iii) the group G preferably corresponds to (i.e. is derived from) one or more methacrylate monomers (when R1 is methyl and -Y is the appropriate hydrophobic derivative function) or corresponds to an acrylate monomer (when R1 is hydrogen and -Y is the appropriate hydrophobic derivative function) or is a styrene derivative (when R1 is hydrogen and Y is phenyl substituted with a hydrophobic moiety). It is preferred that the group-Y is or carries a hydrophobic moiety Y' selected from -CO-O-(-Si(CH₃)₂O-)ₙ₋H
wherein n is from 3 to 20; -CO-O-polypropylene glycol; -CO-O-A wherein A is a C₁-C₁₂ alkyl group, a C₃-C₈ cycloalkyl group, alkylcycloalkyl group wherein the alkyl portion contains 1 to 12 carbon atoms and the cycloalkyl group contains 3 to 8 carbon atoms, aralkyl group or alkylaryl group; and -CONHB wherein B is a C₅-C₁₂ alkyl group.

It is especially preferred that the unit E is derived from one or more of the following monomers:-
DMMAEA betaine#: 2-(N,N-Dimethyl-N-(2-methacryloxyethyl) ammonium)ethanoic acid, wherein R1 is methyl and -X has the formula 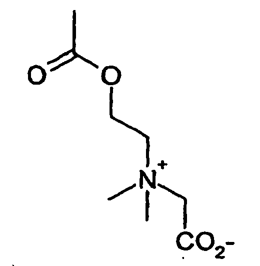
QuatDMAEMA: 2-(Trimethylammonium)ethyl (meth)acrylate salt;
   wherein R1 is methyl or H and -X has the formula wherein Hal⁻ is a suitable anion such as halide, for example iodide or chloride 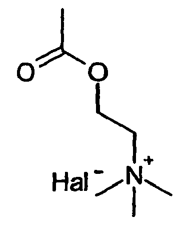
DMMAPSA betaine: 3-(N,N-Dimethyl-N-(2-methacryloxyethyl) ammonium)propyl-sulphonic acid, wherein R1 is methyl and -X has the formula 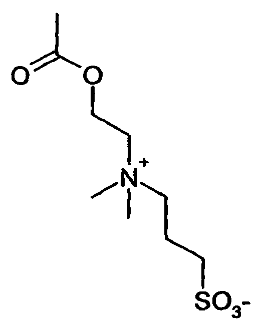
NaMAA#, the sodium salt of methacrylic acid, wherein R1 is methyl and -X has the formula 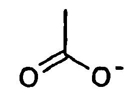
MAOES# mono-2-(Methacryioyloxy)ethyl succinate wherein R1 is methyl and -X has the formula 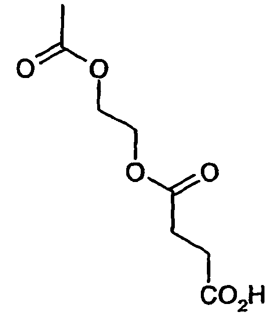
PEGMA: Mono-methoxy poly(ethylene glycol) mono-methacrylate; wherein R1 is methyl and -X has the formula wherein n indicates the average degree of polymerisation of the polyethylene glycol chain and is typically from 5 to 100, for example from 5 to 75. 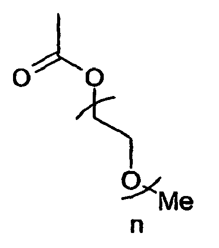
SSA: Styrene-4-sulfonic acid;
   wherein R1 is hydrogen and -X has the formula

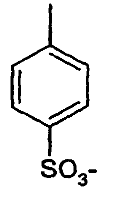

It is preferred that the moiety -X in formula (I) takes one of the above values.

It is preferred that the unit F is derived from one or more of the following monomers:
AEMA: 2-Aminoethyl methacrylate wherein R is methyl and L is the group 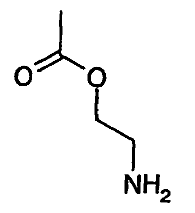
t-BAEMA; 2-(tert-butylamino) ethyl methacrylate where R is methyl and L is the group 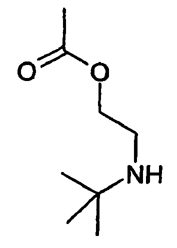
HEMA: 2-Hydroxyethyl methacrylate, wherein R is methyl and L is the group 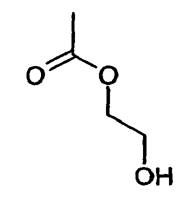
DHPMA; 2,3-dihydroxypropyl methacrylate, where R is methyl and L is the group 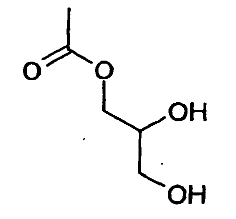
NaMAA# wherein R is methyl and L is the group 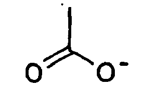
MAOES#: wherein R is methyl and L is the group 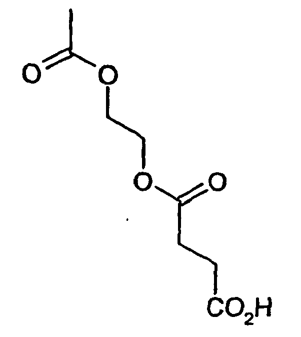
PPGMA#; Poly(propylene glycol) mono-methacrylate wherein R is methyl and L is the group
wherein n indicates the degree of polymerisation of the propylene glycol and is preferably from 5 to 50

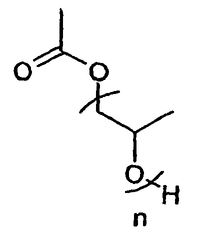

It is preferred that the unit G is derived from one or more of the following monomers:
methyl methacrylate wherein R is methyl and Y is the group: 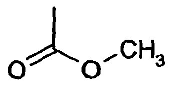
PDMSMA: Poly(dimethylsiloxane) mono-methacrylate, typically with an average molecular weight of 1000 wherein R is methyl and Y is the group 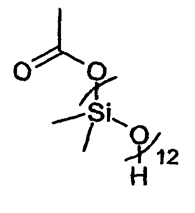
PPGMA#; Poly(propylene glycol) mono-methacrylate wherein R is methyl and L is the group
wherein n indicates the degree of polymerisation of the propylene glycol and is preferably from 5 to 50. In general a relatively greater chain length is preferred in order to provide the necessary hydrophobic character.

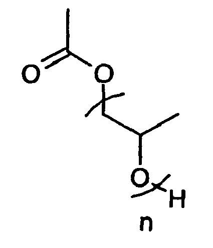

Basic monomers such as AEMA and t-BAEMA may also be used in the form of their salts such as the hydrochloride salt. It will be noted that certain monomers (marked with #) occur in more than one group and for example have hydrophilic groups X that may if desired be used to provide cross linking (i.e. may also act as a moiety L). For example salts of carboxylic acids may be used for stabilisation, when the monomers bearing -CO₂X groups are incorporated into the hydrophilic part of the surfactant. Free carboxylic acids may however be used for cross-linking using aziridine or carbodiimide chemistry, when the monomers bearing the -CO₂H groups would be incorporated into the hydrophobic part of the surfactant. Clearly if -CO₂H is used for cross-linking it cannot be used for stabilisation. Where two different groups in the surfactant are capable of reacting in the cross linking chemistry, but have very different reactivity it is possible to use the less reactive group for stabilisation, for example carboxylates in the hydrophile and hydroxyls in the hydrophobe sections. One skilled in the art is readily able to select the conditions such that a given group undergoes a cross-linking reaction or alternative conditions such that it does not.

Further examples of monomers which can be used to form unit E (and provide corresponding values of R1 and X) include 4-vinylbenzyl trimethyl ammonium chloride, 2-N-morpholinoethyl methacrylate, 2-methacryloxyethylphosphonate methacrylate, 2-acrylamido-2-methylpropane sulphonic acid, mono-methoxy-PEO-(meth)acrylate, acrylamide, vinyl pyrrolidone, 2-sulphoethyl methacrylate, quaternary salts of dimethylaminoethyl methacrylate (DMAEMA) and DMAEMA at acid pHs.

Further example of monomers which can be used to form unit F (and provide corresponding values ofR and L) include single or mixed monomers selected, inter alia from amine functional monomers such as 2-aminoethyl methacrylate hyrochloride, N-(3-aminopropyl)methacrylamide hydrochloride, 4-aminostyrene, 2-(iso-propylamino)ethylstyrene, 4-N-(vinylbenzyl)aminobutyric acid, 3-(N-styrylmethyl-2-aminoethylamino)-propyltrimethyoxysilane hydrochloride, N-(3-methacryloxy-2-hydroxypropyl)-3-aminopropyltriethoxysilane; hydroxy monomers such as 2-methoxy-4-vinylphenol, 4-vinylbenzyl alcohol, 4-vinylphenol, 2,6-dihydroxymethyl-4-methoxystyrene, 3,5-dimethoxy 4-hydroxystyrene, 2-hydroxy-3-methacryloxypropyl trimethyl ammonium chloride, 3-chloro-2-hydroxypropyl methacrylate, 3-hydroxypropyl methacrylate, 2-hydroxy-3-phenoxypropyl methacrylate, diethylene glycol mono-methacrylate, 2- methacryloxyethyl glucoside, sorbitol methacrylate, caprolactone 2-methacryloxyethyl ester, 4-hydroxybutyl methacrylate, 2-hydroxypropyl methacrylate; carboxylic monomers such as acrylic acid, beta-carboxyethylacrylic acid, 4-vinylbenzoic acid, 4-((3-methacryloxy)propoxy)benzoic acid, mono-(2-(methacryloxy)ethyl)phthalate, itaconic acid or iminated derivatives of these monomers once polymerised; monomers such as glycidyl (meth)acrylate which can be converted to reactive functional groups by reaction with, for example, alkylamines

Especially preferred cross-linking units F may be derived from amine functional monomers such as 2-aminoethyhnethacrylate and 2-(tert-butylamino) ethyl methacrylate; hydroxy monomers such as 2-hydroxyethyl methacrylate, carboxylic monomers such as mono-2-(methacryloyloxy)ethyl succinate and methacrylic acid;

Further example of monomers which can be used to form unit G (and provide corresponding values of R₂ and Y) include acrylate (R₂=H) or methacrylate (R₂=methyl) derivatives wherein Y is COOR, and R is alkyl, cycloalkyl, aralkyl or alkaryl, or poly(dimethylsiloxane), vinyl esters, vinyl halogens, styrene or optionally substituted styrenes.

As noted above, Formula (I) describes both random graft or comb copolymer stabilisers and block copolymers. Random graft or comb copolymer stabilisers useful in this invention when the liquid medium is water have a hydrophobic backbone and hydrophilic "arms." In one embodiment of the present invention the surfactant is a random graft or comb copolymer and in the unit E, R¹ is methyl and -X is a group -CO-Z' where Z' is a hydrophilic group such as methoxy-PEG in which PEG (polyethylene glycol) stands for a number of ethylene oxide units (C₂H₄O)q. Preferably in a random graft or comb copolymer, E in Formula I is derived from the monomer methoxyPEG-(meth)acrylate with a degree of polymerisation (DPn) of 5-100. The polymers are random graft or comb copolymers because the units can be distributed in any order in the chain of the molecule. The moieties -CO-Z' form the hydrophilic "arms" of the random graft or comb copolymers and the remaining units form the hydrophobic backbone which also contains the cross-linking moieties L. The Unit E may be a mixture of monomers and/or macromers.

In a random graft or comb copolymer the unit F is as defined in formula (I). L in Unit F is a cross-linking group as previously defined. An especially useful cross-linking group is -CO₂CH₂CH₂OH derived from the monomer hydroxyethyl (meth)acrylate (where R = H or Me). In other preferred units F for use in a random graft or comb copolymer, L may alternatively be derived from a monomer which is a (meth)acrylate ester or functionalised (meth)acrylamide derivative containing a cross-linking group such as found in N-(2-hydroxylpropyl) methacrylamide or a substituted styryl derivative that contains a cross-linking group as a substituent on the phenyl ring such as -SH or -OH or -NHA in which A is hydrogen or C₁-C₄ alkyl, as illustrated by the structure -C₆H₄-CH₂NH₂.

The unit G may take the values as defined above in relation to formula (I).

In a random graft or comb copolymer the value of e is preferably from 0.05 to 0.3 for example 0.1 to 0.5, the value of f is preferably from 0.01-0.4 for example from 0.02 to 0.35 and in particular from 0.02 to 0.20 and the value of g is from 0.10-0.90 for example from 0.13 to 0.90 and in particular from 0.50 to 0.80.

Some novel amphipathic graft copolymers suitable for use in the present invention and methods of preparation are shown in PCT application WO 96/00251 the text of which is incorporated herein by reference.

Preferred block copolymers for use in the present invention are comprised of a hydrophilic block, which in turn is comprised of a hydrophile, which is preferably a residue of the initiator and/or hydrophilic monomer(s) E (-CH₂CR¹X-), adjoined to a hydrophobic block which is comprised of randomly or sequentially copolymerised hydrophobic monomer(s) G (-CH₂CR₂Y-) and cross-linking units F (-CH₂CH₂CRL-) as described by Formula I where the value of e+f+g is 1.0. The value of f+g is preferably from 0.2 to 1.0. The unit E in Formula (I) is as defined above and the value of e is from 0.0 to 0.8. When e is 0 a hydrophilic initiator designated by "*" in Formula (I) must be present. A hydrophilic initiator may be adjoined with Units E. Formula II above defines preferred hydrophilic initiators used in ATRP.

In the case of some of the above block copolymers the hydrophilic block may be introduced from a macro-initiator of defined structure [typically Z-OCOCMe₂Br] which is extended with appropriate amounts of hydrophobic (CH₂=CR₂Y) and cross-linking (CH₂=CRL) monomers giving rise to units G and F respectively. Alternatively, or in addition to the above, the initiator (which may not be a macro-initiator) may be chain extended with a hydrophilic monomer (CH₂=CR₁X) to generate the hydrophilic block and thence with appropriate amounts of hydrophobic (CH₂=CR₂Y) and cross-linking (CH₂=CRL) monomers to generate the hydrophobic block (or alternatively the groups CH₂=CR₁X, CH₂=CR₂Y, and CH₂=CRL may be randomly copolymerised to form graft copolymers).

In general the monomers preferred for random comb and graft copolymers are also preferred for block copolymers. Units F and G comprise the hydrophobic block of the block copolymer surfactants The value of f is from 0.01 to 0.4 and the value of g is from 0.1 to 0.9. The choice for Y determines the hydrophobicity of this unit of the surfactant. For instance, if Y is a long chain ester group such as CO₂C₈H₁₇ and R₂ is hydrogen or methyl, this unit of the surfactant will be very hydrophobic. If, on the other hand, Y is COOCH₃ and R₂ is hydrogen, the unit is less hydrophobic. If G is a styryl unit (i.e., Y is phenyl and R₂ is hydrogen) the unit will be very hydrophobic.

The cross-linking units F may be co-polymerised at a desired mole ratio with other monomers of the G unit to make the hydrophobic block. Typical ratios vary from two to twenty, for example two to ten units of hydrophobic monomers to one cross-linking units (i.e. the ratio of g to f is preferably from 1: 2 to 1:20, for example from 1:2 to 1:10). The chosen ratio depends on the molecular weights and on the desired hydrophilic-hydrophobic balance of the hydrophobic and cross-linking units. The structure of the cross-linking units chosen also depends on the desired chemistry of reaction between the surfactant and the cross-linking component(s) contained in the continuous phase. Hydrophobic monomers G in general, adhere strongly to the suspended agrochemical. Methyl methacrylate is suitably hydrophobic, while butyl acrylate and styrene are even more hydrophobic. Optimum total molecular weight and the sizes of the blocks of the surfactants will depend on the nature of the monomers and on the active ingredient employed in the process. Molecular weights of the polymeric stabiliser in general will range from about 1,000 to about 100,000, for example from about 1,000 to about 20,000. Preferred molecular weights are between about 5,000 to about 50,000.

Preferred units *F* for use in a block copolymer include those derived from the monomers hydroxyethyl methacrylate (R = methyl, L = COOCH₂CH₂OH), methacrylic acid (R = methyl, L = -CO₂H), (mono-2-(methacryloyloxy)ethyl succinate (R = methyl, L = COOCH₂CH₂OCOCH₂CH₂ -CO₂H), 2-(tert-butylamino)ethyl methacrylate or 2aminoethyl methacrylate (R = methyl, L = COOCH₂CH₂NH₂).

The unit G may be made from one or more monomers that upon polymerisation afford a water-insoluble polymer that may be strongly adsorbed to the surface of the suspended agrochemical. Examples of suitable monomers for the unit G in a block copolymer include, *inter alia,* acrylate esters, methacrylate esters, vinyl esters, vinyl halogens, styrene or substituted styrenes.

A cross-linking substance (the reaction partner) is used in the liquid continuous phase of a suspension of the present invention where it reacts with the appropriate functional groups on the reactive polymeric surfactant that is adsorbed on the surface of the solid particles. Many cross-linking chemistries are known. When the cross-linldng moiety L carries a hydroxyl or thiol reactive group, suitable reaction partners may have as their corresponding reactive group, for example, isocyanate, ester or epoxide. As examples of further materials for suitable for reacting with crosslinking hydroxyl groups on the reactive polymeric surfactants we would mention, inter alia, divinylsulphone and glycerol triglycidyl ether.

When the cross-linking moiety L carries an amine reactive group (-NHA as defined above) then suitable reaction partners may have as their corresponding reactive group, for example, isocyanate, acetoacetoxy, aldehyde, acrylate, vinylsulphone or epoxide. As examples of further materials suitable for reacting with cross-linking amine groups on the reactive polymeric surfactants we would mention, inter alia, glycerol triglycidyl ether; glycerol propoxylate triglycidyl ether, trimethylolpropane triacrylate; trimethylolpropane propoxylate triacrylate; glutaric dialdehyde; 2-(acetoacetoxy) ethyl acrylate and 1,4-butandiol diacetoacetate.

When the cross-linking moiety L carries an acid reactive group then suitable reaction partners may have as their corresponding reactive group, for example, isocyanate, aziridine or carbodiimide. The preferred cross-linking/partner combinations of this invention are hydroxyl-isocyanate, amine-isocyanate and acid-carbodiimide. The cross-linking group may react with more than one type of reaction partner compound contained in the aqueous phase that are capable of undergoing cross-linking reactions with said groups. The reaction partner may contain more than one type of functional group capable of undergoing reaction with the reactive cross-linking groups on the polymeric surfactant.

The functionality of the substance contained (dissolved or suspended) in the aqueous phase capable of reacting with the cross-linking groups on the surfactant is suitably equal to or greater than two. The invention is not limited by the structure of the substance provided that the substance reacts with the cross-linking groups on the polymeric surfactant. The substance may be soluble in the liquid medium (preferably an aqueous medium) or may be dispersed in the liquid medium, for example as a water-insoluble oil dispersed in an aqueous medium.

For example, in one embodiment of this invention, when the aqueous medium contains isocyanates as reaction partner, the cross-linking groups carried on the polymeric stabiliser are preferably primary amino, secondary amino, hydroxyl, thiol or carboxyl respectively. Hydroxyl and amino groups are preferred and primary and secondary amino groups are most suitable. Tertiary amino groups may catalyse isocyanate reactions but do not usually form stable reaction products. When more than one functional group on the reactive polymeric surfactant, L, is present the groups may be the same or differently chemically functional. Reactions with isocyanates are illustrated here using generic structures.

Carboxylic groups may be introduced using suitable monomers to derive the group E, for example mono-2-(methacryloyloxy) ethyl succinate, acrylic acid, methacrylic acid, beta-carboxyethylacrylic acid, 4-vinylbenzoic acid and itaconic acid. Enhanced adsorption to the particle surface may be accomplished if the pH of the aqueous medium is first adjusted above the pKa of the acid, i.e., the acid is in the salt form, which favours water solubility, and then subsequently, but before or during cross-linking, reduced to below the pKa of the acid, which will reduce water solubility. Carboxylic acids react with isocyanates to form mixed anhydrides that rapidly eliminate carbon dioxide with the formation of carboxylic amides:

RNCO + R¹CO₂H → [RNHCOOCOR¹] → R¹CONHR + CO₂

Hydroxyl groups may be introduced using suitable monomers to derive the group E such as hydroxyethyl methacrylate and N-(2-hydroxypropyl)methacrylamide. Amino groups may be introduced using suitable monomers to derive the group E such as 2-aminoethyl methacrylate hyrochloride,
N-(3-aminopropyl)methacrylamide hydrochloride or 2-(tert-butylamino)ethyl methacrylate. Thiol, hydroxyl and amino groups react with isocyanates to form respectively thiocarbamate, urethane, and urea linkages:

RNCO + R¹SH → RNHCO-S-R¹ thiocarbamate linkage

RNCO + R¹OH → RNHCO-O-R¹ urethane linkage

RNCO + R¹NH → RNHCO-N-R¹ urea linkage

In a further embodiment of the invention, the nature of the cross-linking groups may be altered, or cross-linking groups may be introduced by post-reaction of the copolymer. For example, carboxylic groups may be iminated to make polyimine combs.

-CO₂H + ethyleneimine → -CO₂-[CH₂CH₂NH]ₙ-H

Amine groups react with isocyanates in the manner described above.

The reactivity of the functional group with the isocyanate influences the rate at which the cross-linking takes place. For example, isocyanates typically react much faster with amines than with alcohols or acids. When hydrolytically sensitive cross-linking agents, such as those containing isocyanate groups, are added to the aqueous medium it is an advantage that a rapid reaction between the functional group on the reactive surfactant and the reactive compound contained in the aqueous phase takes place in preference to hydrolysis.

Multi-functional aziridines such as CX-100 available from Avecia Neoresins (structural formula shown below, m=3) may be used as the reactive compound contained in the aqueous phase if carboxylic acid functional monomers are incorporated into the polymeric surfactant. Aziridines react with carboxy groups in their free acid but not salt forms.

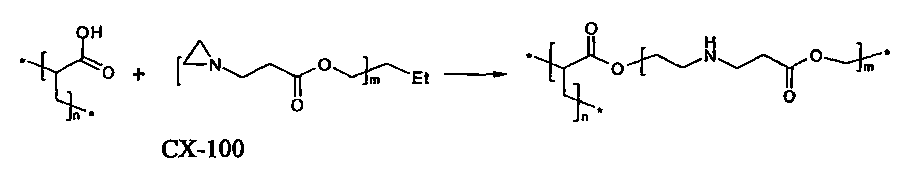

Poly(Carbodiimides) such as CX-300 available from Avecia Neoresins may also be used as the reactive compound contained in the aqueous phase if carboxylic acid functional monomers are incorporated into the polymeric surfactant . Reaction between the carboxylic acid and the carbodiimide is conventionally believed to result in three types of products as illustrated below. The N-acyl urea and urea products are stable while the anhydride may be hydrolysed to two carboxylic acids.

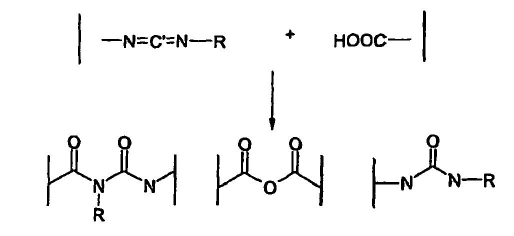

As examples of suitable isocyanates for use in this invention there may be mentioned, inter alia, m-phenylene diisocyanate; 1-chloro-2,4-phenylene diisocyanate; 4,4'-methylenebis(phenyl isocyanate); 3,3'dimethyl-4,4'-biphenylene diisocyanate 4,4'-methylenebis(2-methylphenyl isocyanate); 3,3'dimethoxy-4,4'biphenylene diisocyanate; 2,4-tolylene diisocyanate; 2,6-tolylenediisocyanate; tetramethyl-4,4'-biphenylene diisocyanate; isophorone diisocyanate; hexane-1,6-diisocyanate;tetramethylene xylene diisocyanate; α,4-tolylene diisocyanate; tolylene 2,5-diisocyanate; 2,4,6-trimethyl-1,3-phenylene diisocyanate; poly(ethylene adipate) tolylene 2,4-diisocyanate terminated; poly(isophorone diisocyanate); poly(propylene glycol) tolylene 2,4-diisocyanate terminated; poly(1,4-butanediol) tolylene diisocyanate terminated; 1,8-diisocyanatooctane; poly(hexamethylene diisocyanate); poly(tolylene 2,4-diisocyanate); poly(tetrafluoroethylene oxide-co-difluoromethylene oxide) α,ω-diisocyanate; 1,4-diisocyanatobutane; 1,3-phenylene diisocyanate; 1,4-phenylene diisocyanate; trans-1,4-cyclohexylene diisocyanate; m-xylylene diisocyanate; α,α-dimethyl-α,4-phenylethyl diisocyanate; 4-bromo-6-methyl-1,3-phenylene diisocyanate; 4-chloro-6-methyl-1,3-phenylene diisocyanate; poly(1,4-butanediol) isophorone diisocyanate terminated; 3,3'-dimethyl-4,4'-biphenylene diisocyanate; and 1,3-bis(1-isocyanato-1-methylethyl)benzene.

It is preferred to use a stoichiometric or greater equivalent of functional groups on the cross-linking material relative to the number of cross-linkable functional groups on the reactive polymeric surfactants. As an example, for 'n' amine groups on the reactive polymeric surfactant a similar or greater number 'n' of isocyanate groups would suitably be added from the material in the aqueous phase. Excess functional groups of the aqueous phase material may be used to compensate for any hydrolysis that may occur before the desired cross-linking reaction takes place.

The suspension of an agrochemical solid in an aqueous phase, for example the preparation of a conventional suspension concentrate generally takes place by milling the solid in the presence of the aqueous phase and a suitable surfactant. It is an advantage of the present invention that the reactive polymeric surfactants are effective dispersants when incorporated (prior to cross-linking) to assist the milling process and may subsequently be cross-linked to stabilise the suspension of the milled particle in the aqueous phase.

Thus according to a further aspect of the present invention there is provided a process for the manufacture of a suspension of a particulate solid in an aqueous phase containing substantially no miscible organic solvent which comprises the steps of
1. milling the solid in the presence of the aqueous phase and a polymeric stabiliser having a hydrophilic moiety and a hydrophobic moiety and comprising a plurality ofvinylic monomers, not being exclusively of vinylic esters or of their hydrolysed products, at least some of which contain functional groups capable of undergoing cross-linking reactions; and subsequently
2. reacting said polymeric stabiliser with one or more substances contained (dissolved or suspended) in the aqueous phase and capable of undergoing a cross-linking reaction with said functional groups
wherein the ratio by weight of (a) the polymeric stabiliser prior to cross-linking to (b) the suspended solid is no more than 1 part of polymeric stabiliser per 5 parts of suspended solid.

The substance capable of undergoing a cross-linking reaction is preferably added to the aqueous phase after milling. It is preferred to allow the substance capable of undergoing a cross-linking reaction the opportunity to adsorb onto the solid suspended particles prior to cross-linking. Typically this will take from 5 seconds to 30 minutes.

The invention is illustrated by the following Examples in which all parts and percentages are by weight unless otherwise stated. The following abbreviations are used:
AEMA.HCl: 2-Aminoethyl methacrylate hydrochloride; from Sigma Aldrich.
tBAEMA: 2-(t-Butylamino)ethyl methacrylate, from Sigma Aldrich.
CX-100: Aziridine crosslinker; Avecia NeoResins
CX-300: Poly(carbodiimide) crosslinker, from Avecia NeoResins.
DETA: Diethylene triamine from Sigma-Aldrich
DHPMA: 2,3-dihydroxypropyl methacrylate, Rohm GMBH.
DMAEMA: 2-(Dimethylamino)ethyl methacrylate; from Sigma Aldrich.
QuatDMAEMA (PP): 2-(Trimethylammonium)ethyl methacrylate iodide or chloride where PP indicates that the monomer used was DMAEMA and the quaternisation reaction was carried out post-polymerisation using methyl iodide.
DMMAEA betaine: 2-(N,N-Dimethyl-N-(2-methacryloxyethyl) ammonium)ethanoic acid (prepared *via* a modification of the literature procedure; L. A. Mkrtchyan *et al.* Vysokomol. Soedin., Ser. B 1977, *19*(3), 214-16.
DMMAPSA betaine: 3-(N,N-Dimethyl-N-(2-methacryloxyethyl) ammonium)propyl-sulphonic acid; from Sigma Aldrich.
EDTA: Ethylenediaminetetraacetic acid; from Sigma Aldrich.
HEMA: 2-Hydroxyethyl methacrylate; from Sigma Aldrich.
IPDI: Isophorone diisocyanate (mixture of isomers); from Sigma Aldrich.
NaMAA: Sodium salt of methacrylic acid; from Sigma Aldrich.
MAOES: mono-2-(Methacryloyloxy)ethyl succinate; from Polysciences Inc.
MMA: Methyl methacrylate; from Sigma Aldrich.
PEGMA(#): Mono-methoxy poly(ethylene glycol) mono-methacrylate where # is the average degree of polymerisation of the PEG chain; from Polysciences Inc. or Laporte Performance Chemicals.
PPGMA(#): Mono-methoxy poly(propylene glycol) mono-methacrylate where # is the average degree of polymerisation of the PPG chain; from Laporte Performance Chemicals. SSA: Styrene-4-sulfonic acid; from Sigma Aldrich.
TDI: Tolylene diisocyanate (mixture of isomers); from Sigma Aldrich.
Abamectin: insecticide, miticide, (10*E,*14*E,*16*E,*22*Z*)-(1*R*,4*S*,5'*S*,6*S*,6'*R*,8*R*,12*S*,13*S*,20*R*,21*R*,24*S*)-6'-[(*S*)-*alkyl*]-21,24-dihydroxy-5',11,13,22-tetramethyl-2-oxo-3,7,19-trioxatetracyclo[15.6.1.1^{4,8}.0^{20,24}]pentacosa-10,14,16,22-tetraene-6-spiro-2'-(5',6'-dihydro-2'*H*-pyran)-12-yl 2,6-dideoxy-4-*O*-(2,6-dideoxy-3-*O-*methyl-α-L-*arabino*-hexopyranosyl)-3-*O*-methyl-α-L-*arabino*-hexopyranoside, mixture of isomers *alkyl* = (*sec*-butyl:*iso*-propyl, 4:1).
Azoxystrobin: fungicide, Methyl (E)-2-2-6-(2cyanophenoxy)pyrimidin-4-yloxy-phenyl-3-methoxyacrylate
Chlorothalanil: Fungicide, Tetrachloroisophthalonitrile
Emamectin benzoate : insecticide, benzoate salt of (10*E*, 14*E,* 16*E,* 22*Z*)-(1*R*,4*S*,5'*S*,6*S*,6'*R*,8*R*,12*S*,13*S*,20*R*,21*R*,24*S*)-6'-[(*S*)-*alkyl*]-21,24-dihydroxy-5',11,13,22-tetramethyl-2-oxo-3,7,19-trioxatetracyclo[15.6.1.1^{4,8}.0^{20,24}]pentacosa-10,14,16,22-tetraene-6-spiro-2'-(5',6'-dihydro-2'*H*-pyran)-12-yl 2,6-dideoxy-3-*O*-methyl-4-*O*-(2,4,6-trideoxy-3-*O*-methyl-4-methylamino- α -L-*lyxo*-hexopyranosyl)-α*-L-arabino-*hexopyranoside, mixture of isomers *alkyl* = (*sec*-butyl:*iso*-propyl, 9:1).
Picoxystrobin: fungicide, methyl (*E*)-3-methoxy-2-[2-(6-trifluoromethyl-2-pyridyloxymethyl)phenyl]acrylate.
Thiamethoxam: insecticide, 3-(2-chloro-1,3-thiazol-5-ylmethyl)-5-methyl-1,3,5-oxadiazinan-4-ylidene(nitro)amine.
Avecia NeoResins, Waalwijk, Netherlands. Laporte Performance Chemicals, Hythe, UK. Polysciences Inc, Warrington, PA 18976, USA. Röhm GMBH, 64293 Darmstadt, Germany.
Sigma Aldrich, Gillingham, UK.

For clarity the structures of the above monomers are given as:

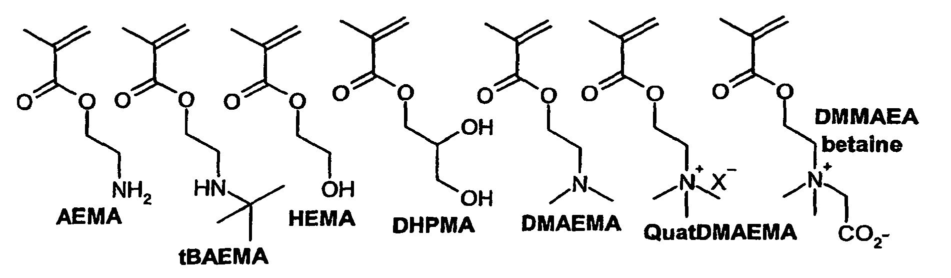

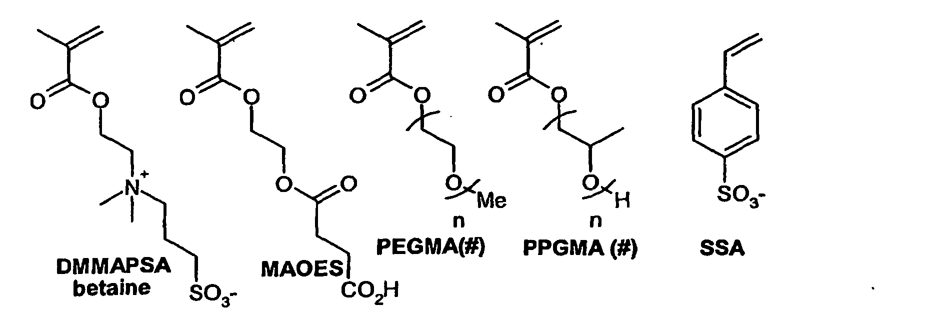

### GENERAL METHOD 1

This Example illustrates the synthesis of reactive polymeric surfactants by atom transfer radical polymerisation (ATRP).

### General synthetic procedure:

In a typical polymerisation monomers at the required molar ratios were dissolved in a suitable solvent or solvent mixture (see Table 1). If the desired product was a non-ionic block or random graft or comb copolymer then all the required monomers were used at once. If the desired product was an ionic block copolymer then just the monomers for one block, either the hydrophilic or hydrophobic one, were used. The monomers for the second block were added in a second batch after the first batch reached high polymer conversion. Methanol-water mixtures (between 1:1 and 3:1 v/v) were most often used since many of the monomers were poorly soluble in organic solvents, e.g. AEMA.HCl, QuatDMAEMA, SSA, DMMAPSA betaine and DMMAEA betaine. Toluene was sometimes used if all the required monomers were soluble in aromatic hydrocarbons.

An appropriate initiator was added (see Table 1). For the preparation of non-ionic block co-polymers this was a polymeric macroinitiator such as a mono-2-bromoisobutyryl mono-methoxy poly(ethylene glycol), abbreviated PEG-Br (#) where # is the number of ethylene glycol units, prepared via the literature method (Jankova *et al.* Macromolecules, 1998, *31,* 538-541). For the preparation of graft copolymers or ionic block copolymers the initiator was a monomeric halo compound, which may be 4-(bromomethyl)benzoic acid (BMBA), ethyl-2-bromoisobutyrate (EtBiB) or a different monomeric 2-bromoisobutyryl ester (BiB-R). The amount of initiator added was dependant on the target molecular weight for the co-polymer and was calculated from the relationship: (Moles monomer)/(Moles initiator) = Degree of polymerisation of copolymer The target number average molecular weight, *Mₙ,* for each example is given in table 1 in units ofDaltons, Da.

Also added was a ligand for *in-situ* formation of the copper complex (see Table 1). This was usually 2,2'-bipyridine (BPY) for polymerisations in methanol/water mixtures and N-n-propyl-2-pyridylmethanimine (PPMA), prepared via the literature method (Haddleton *et al.* Macromolecules, 1997, *30,* 2190-2193), for polymerisations in toluene.

The reaction solution was de-oxygenated by sparging with dry nitrogen gas for 15-30 min before being transferred to nitrogen filled vessel previously charged with the appropriate copper (I) salt to form the polymerisation mediating complex. This was normally copper (I) bromide, but copper (I) chloride was sometimes used (see Table 1). The reaction was carried out under nitrogen at a controlled temperature that ranged between 25 and 90 °C (see Table 1) for between 3 and 24 hours. The extent of the reaction was measured by ¹H-NMR spectroscopy. In the case of ionic block copolymers the second monomer or comonomer mixture was added to form the second block when conversion of the first monomer batch exceeded 80%. On completion, the reaction solution was passed through a silica column and the polymer isolated by evaporating the solvents under vacuum or by selective precipitation in hexane or diethyl ether. For a reaction requiring the post-polymerisation quaternisation of DMAEMA the reaction solution was diluted with toluene, cooled and filtered to remove insoluble material then the solvent was removed under vacuum. The polymer was dissolved in THF and 20% molar excess of iodomethane to tertiary amino groups added. The solution was stirred under nitrogen at 20 °C for between 16 and 20 hours and the polymer was isolated by selective precipitation into hexane. The polymer was then further purified by Soxhlet extraction with hexane for 24 hours followed by drying under vacuum at 50 °C.

The above general procedure was used to prepare the polymeric surfactants detailed in Table 1 where: -
Examples 1.1 to 1.3 illustrate carboxylic acid containing block and comb copolymers
Examples 1.4 to 1.6 illustrate amine and amine plus carboxylic containing block and comb copolymers
Examples 1.18 to 1.27 illustrate hydroxyl containing block and comb copolymers.
In the column showing the proportion of the monomers used, * indicates monomers added in a second batch to form the B block of a diblock copolymer.

| **Patent Example No** | **Structure** | **Monomers / mole %** | | **Initiator** | **ligand** | **Copper salt** | **Solvent** | **Temp. /°C** | **Target Mₙ/Da** |
|---|---|---|---|---|---|---|---|---|---|
| 1.1 | Non-ionic diblock | MMA | 80 | PEG-Br | PPMA | CuCl | Toluene | 90 | 6000 |
| | | MAOES | 20 | (45) | | | | | |
| 1.2 | Non-ionic comb | MMA | 75 | EtBiB | PPMA | CuCl | Toluene | 70 | 20000 |
| | | MAOES | 10 | | | | | | |
| | | PEGMA(9) | 15 | | | | | | |
| 1.3 | Zwitterionic/ non- | MMA | 58 | BiB-R | BPY | CuBr | Methanol 75% | 20 | 16000 |
| | ionic comb | DMMAEA betaine | 32 | | | | Water 25% | | |
| | | PEGMA(39) | 10 | | | | | | |
| 1.4 | Anionic/non-ionic | MMA | 74.7 | EtBiB | BPY | CuCl | Methanol 60% | 50 | 22000 |
| | comb | AEMA.HCl | 8.3 | | | | Water 40% | | |
| | | MAOES | 11.4 | | | | | | |
| | | PEGMA(23) | 5.6 | | | | | | |
| 1.5 | Anionic/ non-ionic | MMA | 65 | EtBiB | BPY | CuBr | Methanol 65% | 50 | 20000 |
| | comb | AEMA.HCl | 13 | | | | Water 35% | | |
| | | MAOES | 12 | | | | | | |
| | | PEGMA(23) | 10 | | | | | | |
| 1.6 | Anionic/ non-ionic | MMA | 60 | BiB-R | BPY | CuBr | Methanol 75% | 20 | 16000 |
| | comb | AEMA.HCl | 24 | | | | Water 25% | | |
| | | NaMAA | 6 | | | | | | |
| | | PEGMA(39) | 10 | | | | | | |
| 1.7 | Non-ionic comb | MMA | 71 | EtBiB | BPY | CuBr | Methanol 65% | 50 | 20000 |
| | | AEMA.HCl | 10 | | | | Water 35% | | |
| | | PEGMA (9) | 19 | | | | | | |
| 1.8 | Non-ionic comb | MMA | 84 | EtBiB | BPY | CuBr | Methanol 65% | 50 | 20000 |
| | | AEMA.HCl | 5 | | | | Water 35% | | |
| | | PEGMA(23) | 11 | | | | | | |
| 1.9 | Cationic/ non-ionic | MMA | 55 | EtBiB | BPY | CuBr | Methanol 65% | 50 | 20000 |
| | comb | tBAEMA | 20 | | | | Water 35% | | |
| | | QuatDMAEMA | 15 | | | | | | |
| | | PEGMA(39) | 10 | | | | | | |
| 1.10 | Cationic/ non-ionic | MMA | 60 | BiB-R | BPY | CuBr | Methanol 75% | 20 | 16000 |
| | comb | AEMA.HCl | 24 | | | | Water 25% | | |
| | | QuatDMAEMA | 6 | | | | | | |
| | | PEGMA(39) | 10 | | | | | | |
| 1.11 | Non-ionic diblock | MMA | 90 | PEG-Br | BPY | CuBr | Methanol 50% | 20 | 4000 |
| | | AEMA.HCl | 10 | (45) | | | Water 50% | | |
| 1.12 | Cationic/ | MMA | 73.5 | EtBiB | PPMA | CuCl | Toluene | 70 | 20000 |
| | non-ionic comb | HEMA | 10 | | | | | | |
| | | QuatDMAEMA (PP) | 10 | | | | | | |
| | | PEGMA(23) | 6.5 | | | | | | |
| 1.13 | Cationic/ | MMA | 60 | BiB-R | BPY | CuBr | Methanol 75% | 20 | 16000 |
| | non-ionic comb | HEMA | 24 | | | | Water 25% | | |
| | | QuatDMAEMA | 6 | | | | | | |
| | | PEGMA(39) | 10 | | | | | | |
| 1.14 | Zwitterionic/ non- | MMA | 60 | BiB-R | BPY | CuBr | Methanol 75% | 20 | 16000 |
| | ionic comb | HEMA | 24 | | | | Water 25% | | |
| | | DMMAPSA betaine | 6 | | | | | | |
| | | PEGMA(39) | 10 | | | | | | |
| 1.15 | Anionic/ non-ionic | MMA | 60 | BiB-R | BPY | CuBr | Methanol 75% | 20 | 16000 |
| | comb | HEMA | 24 | | | | Water 25% | | |
| | | SSA | 6 | | | | | | |
| | | PEGMA(39) | 10 | | | | | | |
| 1.16 | Anionic/ non-ionic | MMA | 60 | BiB-R | BPY | CuBr | Methanol 75% | 20 | 32000 |
| | comb | HEMA | 24 | | | | Water 25% | | |
| | | SSA | 6 | | | | | | |
| | | PEGMA(39) | 10 | | | | | | |
| 1.17 | Anionic/ non-ionic | MMA | 60 | BiB-R | BPY | CuBr. | Methanol 75% | 20 | 16000 |
| | comb | HEMA | 24 | | | | Water 25% | | |
| | | NaMAA | 6 | | | | | | |
| | | PEGMA(39) | 10 | | | | | | |
| 1.18 | Non-ionic comb | PEGMA(39) | 20 | PEG-Br | BPY | CuBr | Methanol 75% | 20 | 21000 |
| | | PPGMA(7) | 80* | (7) | | | Water 25% | | |
| 1.19 | Non-ionic comb | PEGMA(39) | 20 | PEG-Br | BPY | CuBr | Methanol 75% | 20 | 11500 |
| | | PPGMA(7) | 80* | (7) | | | Water 25% | | |
| 1.20 | Non-ionic diblock, | PEGMA(39) | 20 | PEG-Br | BPY | CuBr | Methanol 75% | 20 | 11000 |
| | comb | PPGMA(7) | 80* | (7) | | | Water 25% | | |
| 1.21 | Cationic diblock | MMA | 45 | EtBiB | PPMA | CuCl | Toluene | 90 | 7000 |
| | | HEMA | 5 | | | | | | |
| | | QuatDMAEMA (PP) | 50* | | | | | | |
| 1.22 | Cationic diblock | MMA | 30* | BiB-R | BPY | CuBr | Methanol | 20 | 10000 |
| | | HEMA | 20* | | | | | | |
| | | QuatDMAEMA | 50 | | | | | | |
| 1.23 | Non-ionic diblock | MMA | 90 | PEG-Br | PPMA | CuBr | Toluene | 90 | 4000 |
| | | HEMA | 10 | (45) | | | | | |
| 1.24 | Non-ionic diblock | MMA | 50 | PEG-Br | BPY | CuBr | Methanol | 20 | 7200 |
| | | DHPMA | 50 | (45) | | | | | |
| 1.25 | Non-ionic diblock | MMA | 37 | PEG-Br | BPY | CuBr | Methanol | 20 | 6600 |
| | | DHPMA | 63 | (45) | | | | | |
| 1.26 | Non-ionic diblock | MMA | 45 | PEG-Br | BPY | CuBr | Methanol | 20 | 6600 |
| | | HEMA | 55 | (45) | | | | | |
| 1.27 | Anionic diblock | MMA | 30* | BMBA | BPY | CuBr | Methanol | 20 | 10000 |
| | | HEMA | 20* | | | | | | |
| | | SSA | 50 | | | | | | |

### GENERAL METHOD 2

This Example illustrates the preparation of aqueous dispersions of milled agrochemicals in the presence of reactive polymeric surfactants

### General Dispersion Procedure

The general procedure used to prepare dispersions should not be interpreted as a limitation on the invention.

Suspension concentrates (SC's) were prepared by milling the ingredients (Table 2) with number 4 zirconia beads in a Glenn Creston Spex 8000 shaker mill for 30 minutes. Typically, the SC consisted of 20% w/w solid agrochemical active ingredient in de-ionised water. The reactive polymeric stabiliser was used at concentrations of 0.5-10 w/w % with respect to solids (ratio by weight of polymeric stabiliser to suspended solid from 1: 200 to 1:10). The suspensions were assessed for particle size, the degree of foaming and the fluidity. The particle size was used as an indicator of the effectiveness of the polymeric stabiliser as a dispersant and milling aid. The quality of the dispersion of all dispersions in Table 2 was either "Excellent" (E) or "Good" (G) where "Excellent" describes generally a fluid SC with little or no foaming and a particle size of ≤ 2-3 µm; and "Good" describes a fluid to slightly viscous SC with little to medium foaming and a particles size of ≤ 5µm.

The above general procedure was used to prepare dispersions detailed in Table 2 where the polymeric stabiliser used is indicated by its identifying number in Table 1. In Table 2, the column "% solids" indicates the % w/w solid agrochemical active ingredient in de-ionised water. The column "Polymer Concentration" indicates the % by weight of the stabilising polymer relative to the active ingredient. The size of the dispersed particles after milling is given in Table 2 in microns.

**Table 2**

| Dispersions Prepared using polymeric stabilisers prior to cross-linking | | | | | | | |
|---|---|---|---|---|---|---|---|
| Dispersion Reference | Polymer (Table 1 Reference) | Cross-linking Group | Agrochemical | % solids | Polymer Concentration % | Size (µm) | Quality |
| 2.1 | 1.1 | CO2H | Picoxystrobin | 20 | 5 | 1.61 | E |
| 2.2 | 1.1 | CO2H | Abamectin | 20 | 2 | 2.39 | E |
| 2.3 | 1.1 | CO2H | Chlorothalonil | 20 | 2 | 2.06 | E |
| 2.4 | 1.1 | CO2H | Picoxystrobin | 20 | 2 | 1.76 | E |
| 2.5 | 1.1 | CO2H | Picoxystrobin | 20 | 10 | 0.55 | G |
| 2.6 | 1.1 | CO2H | Thiamethoxam | 20 | 2 | n.m. | G |
| 2.7 | 1.2 | CO2H | Picoxystrobin | 20 | 5 | 1.52 | E |
| 2.8 | 1.2 | CO2H | Azoxystrobin | 20 | 2 | 1.48 | G |
| 2.9 | 1.2 | CO2H | Chlorothalonil | 20 | 2 | 2.16 | G |
| 2.10 | 1.2 | CO2H | Picoxystrobin | 20 | 2 | 1.61 | E |
| 2.11 | 1.2 | CO2H | Picoxystrobin | 20 | 10 | 0.77 | G |
| 2.12 | 1.2 | CO2H | Thiamethoxam | 20 | 2 | n.m. | G |
| 2.13 | 1.3 | CO2H | Abamectin | 20 | 2 | 1.44 | E |
| 2.14 | 1.3 | CO2H | Azoxystrobin | 20 | 2 | 0.95 | E |
| 2.15 | 1.3 | CO2H | Chlorothalonil | 20 | 2 | 1.78 | G |
| 2.16 | 1.3 | CO2H | Thiamethoxam | 20 | 2 | n.m. | E |
| 2.17 | 1.4 | CO2H/NH2 | Picoxystrobin | 20 | 5 | 2.04 | E |
| 2.18 | 1.4 | CO2H/NH2 | Abamectin | 20 | 2 | 1.32 | E |
| 2.19 | 1.4 | CO2H/NH2 | Thiamethoxam | 20 | 2 | n.m. | E |
| 2.20 | 1.5 | CO2H/NH2 | Abamectin | 20 | 2 | 2.4 | E |
| 2.21 | 1.5 | CO2H/NH2 | Abamectin | 20 | 1 | 2.2 | E |
| 2.22 | 1.5 | CO2H/NH2 | Abamectin | 20 | 0.5 | 3.4 | E |
| 2.23 | 1.5 | CO2H/NH2 | Azoxystrobin | 20 | 2 | 1.4 | E |
| 2.24 | 1.5 | CO2H/NH2 | Azoxystrobin | 20 | 1 | 1.0 | E |
| 2.25 | 1.5 | CO2H/NH2 | Azoxystrobin | 20 | 0.5 | 1.8 | E |
| 2.26 | 1.5 | CO2H/NH2 | Chlorothalonil | 20 | 2 | 2.0 | E |
| 2.27 | 1.5 | CO2H/NH2 | Chlorothalonil | 20 | 2 | 2.8 | E |
| 2.28 | 1.5 | CO2H/NH2 | Chlorothalonil | 20 | 1 | 2.1 | E |
| 2.29 | 1.5 | CO2H/NH2 | Chlorothatonil | 20 | 0.5 | 3.2 | G |
| 2.30 | 1.5 | CO2H/NH2 | Emamectin | 20 | 2 | 1.6 | E |
| 2.31 | 1.5 | CO2H/NH2 | Picoxystrobin | 20 | 2 | 1.8 | E |
| 2.32 | 1.5 | CO2H/NH2 | Picoxystrobin | 20 | 1 | 1.8 | E |
| 2.33 | 1.5 | CO2H/NH2 | Thiamethoxam | 20 | 2 | n.m. | E |
| 2.34 | 1.5 | CO2H/NH2 | Chlorothalonil | 20 | 2 | 2.4 | E |
| 2.35 | 1.8 | NH2 | Picoxystrobin | 20 | 5 | 1.33 | E |
| 2.36 | 1.11 | NH2 | Picoxystrobin | 20 | 5 | 1.08 | E |
| 2.37 | 1.6 | NH2 | Picoxystrobin | 20 | 5 | 2.01 | E |
| 2.38 | 1.10 | NH2 | Picoxystrobin | 20 | 5 | 1.54 | E |
| 2.39 | 1.7 | NH2 | Picoxystrobin | 20 | 5 | 1.58 | E |
| 2.40 | 1.7 | NH2 | Abamectin | 20 | 2 | 3.40 | E |
| 2.41 | 1.7 | NH2 | Azoxystrobin | 20 | 2 | 1.93 | E |
| 2.42 | 1.7 | NH2 | Chlorothalonil | 20 | 2 | 2.39 | E |
| 2.43 | 1.7 | NH2 | Picoxystrobin | 20 | 2 | 1.72 | E |
| 2.44 | 1.7 | NH2 | Picoxystrobin | 20 | 10 | 0.72 | E |
| 2.45 | 1.7 | NH2 | Thiamethoxam | 20 | 2 | n.m. | E |
| 2.46 | 1.9 | NH2 | Abamectin | 20 | 2 | 2.07 | G |
| 2.47 | 1.9 | NH2 | Azoxystrobin | 20 | 2 | 1.21 | G |
| 2.48 | 1.9 | NH2 | Chlorothalonil | 20 | 2 | 1.36 | G |
| 2.49 | 1.9 | NH2 | Thiamethoxam | 20 | 2 | n.m. | E |
| 2.50 | 1.23 | OH | Picoxystrobin | 20 | 10 | 1.66 | G |
| 2.51 | 1.23 | OH | Picoxystrobin | 20 | 5 | 1.84 | E |
| 2.52 | 1.21 | OH | Abamectin | 20 | 2 | 1.62 | E |
| 2.53 | 1.21 | OH | Chlorothalonil | 20 | 2 | 2.33 | E |
| 2.54 | 1.21 | OH | Picoxystrobin | 20 | 5 | 1.55 | G |
| 2.55 | 1.21 | OH | Picoxystrobin | 20 | 2 | 1.73 | E |
| 2.56 | 1.21 | OH | Picoxystrobin | 20 | 10 | 0.5 | E |
| 2.57 | 1.21 | OH | Thiamethoxam | 20 | 2 | n.m. | G |
| 2.58 | 1.12 | OH | Picoxystrobin | 20 | 5 | 0.91 | E |
| 2.59 | 1.21 | OH | Azoxystrobin | 20 | 2 | 1.06 | E |
| 2.60 | 1.15 | OH | Picoxystrobin | 20 | 5 | 2.02 | E |
| 2.61 | 1.16 | OH | Picoxystrobin | 20 | 5 | 2.13 | E |
| 2.62 | 1.13 | OH | Picoxystrobin | 20 | 5 | 1.69 | G |
| 2.63 | 1.14 | OH | Picoxystrobin | 20 | 5 | 1.61 | E |
| 2.64 | 1.20 | OH | Picoxystrobin | 20 | 10 | 2.94 | G |
| 2.65 | 1.18 | OH | Picoxystrobin | 20 | 5 | 2.04 | E |
| 2.66 | 1.19 | OH | Picoxystrobin | 20 | 10 | 2.24 | G |
| 2.67 | 1.24 | OH | Picoxystrobin | 20 | 10 | 0.94 | E |
| 2.68 | 1.25 | OH | Picoxystrobin | 20 | 10 | 1.45 | E |
| 2.69 | 1.26 | OH | Picoxystrobin | 20 | 10 | 1.55 | E |
| 2.70 | 1.22 | OH | Thiamethoxam | 20 | 0.5 | n.m. | E |
| 2.71 | 1.27 | OH | Abamectin | 20 | 0.5 | n.m. | E |
| 2.72 | 1.27 | OH | Thiamethoxam | 20 | 2 | n.m. | E |
| 2.73 | 1.27 | OH | Thiamethoxam | 20 | 0.5 | n.m. | G |

| | | | | | | | |
|---|---|---|---|---|---|---|---|
| n.m means not measured; E=excellent; G=Good | | | | | | | |

### EXAMPLES 3.1 TO 3.28

These Examples illustrate the cross linking of the polymeric stabiliser by reaction with a cross-linking substance to form a particulate suspension according to the present invention. The following procedure was used: -
Hydroxy and amine functional polymeric stabilisers were cross-linked by either (i) dispersing TDI in the aqueous phase of the SC, allowing some time for the TDI to adsorb on to the particles, then heating at 50°C for 1h or stirring at room temperature for 3 hours, or (ii) dispersing IPDI in the aqueous phase of the SC, allowing some time for the IPDI to adsorb on to the particles, then adding diethylene triamine (DETA) to react with excess isocyanate.
Carboxylic acid functional RPS SC's were cross-linked by dispersing CX-100 or CX-300 into the SC at pH ≥9 and stirring at room temperature for 30 minutes to achieve adsorption of the cross-linker. The pH was reduced to -2 and, after stirring for a further 1 hour, a small amount of EDTA was added to react with excess carbodiimide.
The above general procedures were used to prepare the dispersions detailed in Table 3. The quality of all suspension concentrates of the invention illustrated in Table 3 was deemed either "excellent" or "good" where "excellent" describes a sample in which there was no material change in particle size or viscosity of the SC during the cross-linking reaction and "good" indicates that a small degree of aggregation was encountered during the cross-linking reaction, but that there was no major change to the suspension properties. In Table 3, the dispersion being cross-linked is indicated by its reference number in Table 2 which in turn identifies the polymeric surfactant by its reference number in Table 1.

**Table 3**

| Cross-Linked Suspension Concentrates According to the Invention | | | | | |
|---|---|---|---|---|---|
| **Example** | Dispersion Reference | Polymer (Table 1 Reference) | **Cross-Linking Substance** | **Size (µm)** | **Quality** |
| 3.1 | 2.1 | 1.1 | CX-300 | 1.04 | E |
| 3.2 | 2.7 | 1.2 | CX-300 | 1.10 | E |
| 3.3 | 2.17 | 1.4 | CX-300 | 2.04 | E |
| 3.4 | 2.18 | 1.4 | CX-100 | n.m. | E |
| 3.5 | 2.18 | 1.4 | CX-300 | n.m. | E |
| 3.6 | 2.23 | 1.5 | TDI | nm | E |
| 3.7 | 2.35 | 1.8 | TDI | 3.08 | G |
| 3.8 | 2.35 | 1.8 | IPDI | 1.08 | E |
| 3.9 | 2.36 | 1.11 | TDI | 4.58 | G |
| 3.10 | 2.36 | 1.11 | IPDI | 1.01 | E |
| 3.11 | 2.39 | 1.7 | TDI | 3.79 | G |
| 3.12 | 2.39 | 1.7 | IPDI | 1.31 | E |
| 3.13 | 2.37 | 1.6 | TDI | 1.50 | G |
| 3.14 | 2.37 | 1.6 | IPDI | 1.40 | G |
| 3.15 | 2.37 | 1.6 | CX-300 | 1.25 | E |
| 3.16 | 2.38 | 1.10 | TDI | 1.17 | E |
| 3.17 | 2.38 | 1.10 | IPDI | 1.09 | E |
| 3.18 | 2.51 | 1.23 | TDI | 3.51 | G |
| 3.19 | 2.51 | 1.23 | IPDI | 1.18 | E |
| 3.20 | 2.54 | 1.21 | TDI | 1.95 | G |
| 3.21 | 2.54 | 1.21 | IPDI | 1.79 | E |
| 3.22 | 2.58 | 1.12 | TDI | 1.00 | G |
| 3.23 | 2.58 | 1.12 | IPDI | 1.03 | E |
| 3.24 | 2.60 | 1.15 | TDI | 1.90 | E |
| 3.25 | 2.60 | 1.15 | IPDI | 1.84 | E |
| 3.26 | 2.63 | 1.14 | TDI | 1.84 | E |
| 3.27 | 2.63 | 1.14 | IPDI | 1.32 | E |
| 3.28 | 2.65 | 1.18 | IPDI | 1.40 | G |

### EXAMPLE 4

This Example illustrates that the process of the present invention enhances the stability of a particulate suspension of abamectin. Samples of abamectin SC were prepared with the polymer from Example 1.5, to form uncrosslinked product of Example 2.23. This was compared with the corresponding crosslinked polymer (Example 3.6). The SC samples were diluted in various concentrations of Na₂SO₄ solution to study the SC stability. Sedimentation in various electrolyte concentrations and at various temperatures was evaluated to determine the stability of the suspensions under these conditions. As the concentration and temperature were increased, conditions were eventually reached at which the suspension was seen to flocculate to form gross flocs. Cross-linking of the reactive polymeric surfactant with TDI increased the temperature at which aggregation was found to occur for a given electrolyte concentration.

## Claims

1. A method of enhancing the stability of a particulate suspension comprising an aqueous phase containing substantially no miscible organic solvent having suspended therein an agrochemical solid substantially insoluble in said aqueous phase which comprises
(i) forming a polymeric stabiliser having a hydrophilic moiety and a hydrophobic moiety by polymerising a plurality of vinylic monomers, not being exclusively vinylic esters or their hydrolysed products, at least some of which contain functional groups capable of undergoing cross-linking reactions and
(ii) reacting said polymeric stabiliser with one or more substances contained (dissolved or suspended) in the aqueous phase capable of undergoing a cross-linking reaction with said functional groups; wherein the ratio by weight of (a) the polymeric stabiliser prior to cross-linking to (b) the suspended agrochemical is from 1 part of polymeric stabiliser to 200 parts of suspended agrochemical to 1 part of polymeric stabiliser per 10 parts of suspended agrochemical.

2. A method according to claim 1 wherein the solid is milled or otherwise dispersed in the presence of the aqueous phase and the polymeric stabiliser prior to step (ii).

3. A method according to claim 1 or claim 2 wherein the particle size of the suspended agrochemical is from 1 to 10 microns.

4. A method according to claim 1 wherein polymeric stabiliser is represented by the general formula (I): 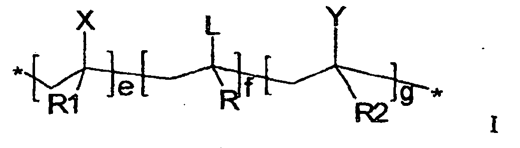 wherein one * represents the residue of an initiator group and the other * represents the residue of a terminator group; R1, R and R2 are independently H or methyl; X is a hydrophilic moiety; L is a moiety containing a cross-linking group; Y is a hydrophobic moiety; the value of e is from 0 to 0.8; the value of f is from 0.01 to 0.4 and the value of g is from 0.10 to 0.90 and e + f+ g equals 1, provided that when e is 0, * represents the residue of a hydrophilic initiator.

5. A method according to claim 4 wherein the value of e is from 0.005 to 0.35, the value of f is from 0.05 to 0.4.

6. A method according to claim 4 or 5 wherein * represents the residue of a hydrophilic initiator and said residue has the formula 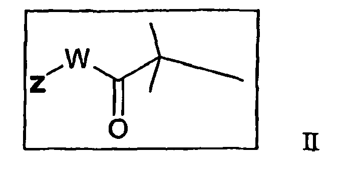 wherein Z is a hydrophilic group selected from C₁ to C₄ alkoxypolyethylene glycol, phenyloxy polyethylene glycol, poly(acrylamide), poly(vinyl pyrrolidone) or poly(methyl vinyl ether) and -W- is -O- or -NA- wherein A is hydrogen or C₁ to C₄ alky group.

7. A method according to any of claims 4 to 6 wherein the units E, F and G as herein defined correspond to one or monomers which is a methacrylate, an acrylate or a substituted styrene monomer.

8. A method according to claim 7 wherein -X is or carries a hydrophilic moiety X'selected from -SO₃⁻; polyethylene glycol optionally end-capped with C1-C4 alkyl; -COOH or a salt thereof; carboxybetaine; sulfobetaine; and a quaternary ammonium salt -N⁺R³₃C⁻ wherein each R³ is independently H or C₁-C₄ alkyl or -CH₂CH₂OH and wherein-L is or carries a cross-linking group L'selected from -OH; -SH; -NHA where A is hydrogen or C₁-C₄ alkyl; and -COOH or a salt thereof and -Y is or carries a hydrophobic moiety Y' selected from -CO-O-(-Si(CH₃)₂O-)ₙ₋H wherein n is from 3 to 20; -CO-O-polypropylene glycol; - CO-O-A wherein A is a C₁-C₁₂ alkyl group, cycloaklyl group, alkylcycloalkyl group, aralkyl group or alkylaryl group; and -CONHB wherein B is a C₅-C₁₂ alkyl group.

9. A method according any of claims 4 to 8 wherein -X is selected from the groups 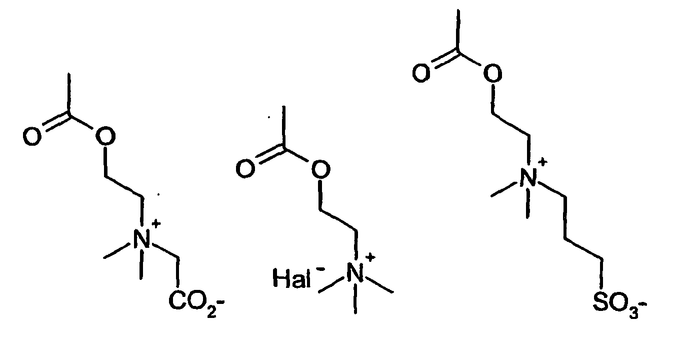 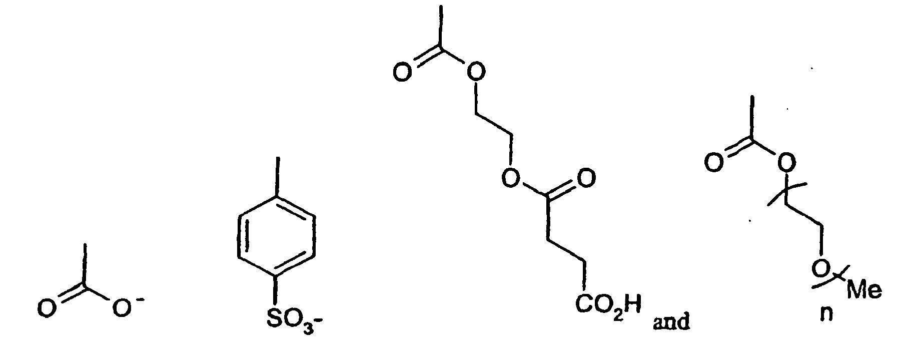 wherein n indicates the average degree of polymerisation of the polyethylene glycol chain and is from 5 to 100.

10. A method according any of claims 4 to 9 wherein -L is selected from the groups 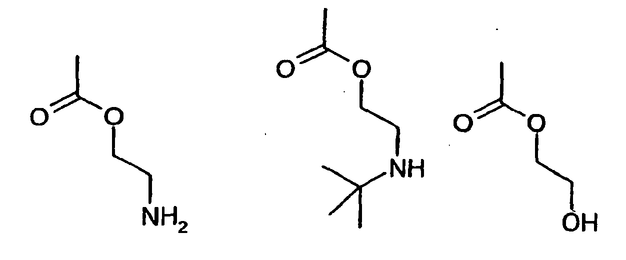 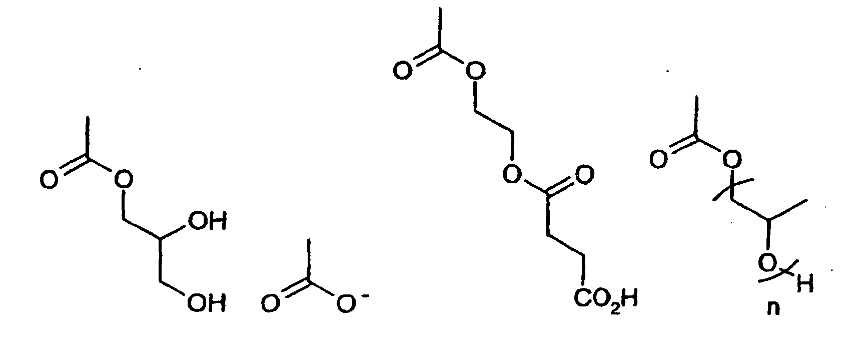 wherein n indicates the degree of polymerisation of the propylene glycol and is from 5 to 50

11. A method according any of claims 4 to 10 wherein -Y is selected from the groups 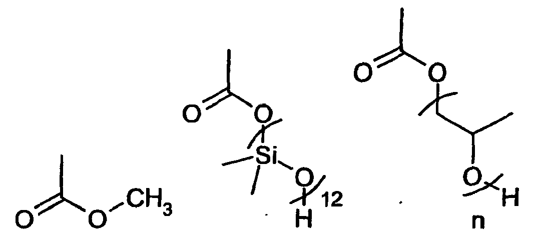 wherein n indicates the degree of polymerisation of the propylene glycol and is from 5 to 50.

12. A method according to claim 1wherein the polymeric stabiliser has a hydrophilic moiety, a hydrophobic moiety and a moiety that possesses reactive or cross-linking ability with respect to the one or more substances contained in the aqueous phase of the suspension and capable of undergoing a cross-linking reaction with said functional group and wherein the hydrophilic moiety is derived from one or more vinylic monomers selected from 2-(N,N-Dimethyl-N-(2-methacryloxyethyl) ammonium)ethanoic acid, 2-(trimethylammonium)ethyl methacrylate salt ; 3-(N,N-dimethyl-N-(2-methacryloxyethyl) ammonium)propyl-sulphonic acid, the sodium salt of methacrylic acid, mono-2-(methacryloyloxy)ethyl succinate, mono-methoxy poly(ethylene glycol) mono-methacrylate, styrene-4-sulfonic acid, 4-vinylbenzyl trimethyl ammonium chloride, 2-N-morpholinoethyl, 2-methacryloxyethylphosphonate methacrylate, 2-acrylamido-2-methylpropane sulphonic acid, mono-methoxy-PEO-(meth)acrylate, acrylamide, vinyl pyrrolidone, 2-sulphoethyl methacrylate, 2-acrylamido-2-methylpropane sulphonic acid, quaternary salts of dimethylaminoethyl methacrylate (DMAEMA) and of dimethylaminoethyl acrylate or DMAEMA at acid pHs, 2-(trimethylammonium)ethyl methacrylate iodide, 2-(N,N-dimethyl-N-(2-methacryloxyethyl) ammonium)ethanoic acid, or styrene-4-sulfonic acid
and wherein the moiety that possesses reactive or cross-linking ability is derived from one or more vinylic monomers selected from 2-Aminoethyl methacrylate, 2-(tert-butylamino) ethyl methacrylate, 2-Hydroxyethyl methacrylate, 2,3-dihydroxypropyl methacrylate, the sodium salt of methacrylic acid, mono-2-(methacryloyloxy)ethyl succinate, poly(propylene glycol) mono-methacrylate, 2-aminoethyl methacrylate hydrochloride, N-(3-aminopropyl)methacrylamide hydrochloride, 4-aminostyrene, 2-(iso-propylamino)ethylstyrene, 4-N-(vinylbenzyl)aminobutyric acid, 3-(N-styrylmethyl-2-aminoethylamino)-propyltrimethyoxysilane hydrochloride, N-(3-methacryloxy-2-hydroxypropyl)-3-aminopropyltriethoxysilane; 2-methoxy-4-vinylphenol, 4-vinylbenzyl alcohol, 4-vinylphenol, 2,6-dihydroxymethyl-4-methoxystyrene, 3,5-dimethoxy-4-hydroxystyrene, 2-hydroxy-3-methacryloxypropyl trimethyl ammonium chloride, 3-chloro-2-hydroxypropyl methacrylate, 3-hydroxypropyl methacrylate, 2-hydmxy-3-phenoxypropyl methacrylate, diethylene glycol mono-methacrylate, 2-methacryloxyethyl glucoside, sorbitol methacrylate, caprolactone 2-methacryloxyethyl ester, 4-hydroxybutyl methacrylate, 2-hydroxypropyl methacrylate, acrylic acid, beta-carboxyethylacrylic acid, 4-vinylbenzoic acid, 4-((3-methacryloxy)propoxy)benzoic acid, mono-(2-(methacryloxy)ethyl)phthalate itaconic acid or iminated derivatives of these monomers once polymerised, glycidyl (meth)acrylate following conversion to reactive functional groups by reaction with alkylamines,
and wherein the hydrophobic moiety moiety is derived from one or more vinylic monomers selected from methyl methacrylate poly(dimethylsiloxane) mono-methacrylate, poly(propylene glycol) mono-methacrylate.

13. A method according to any of claims 4 to 12 wherein the polymeric stabilizer is a random graft or comb copolymer having a hydrophobic backbone and hydrophilic arms wherein R¹ is -H or methyl and -X is a group -CO-Z' where Z' is methoxy-(polyethylene glycol) having a degree of polymerisation (DPn) of 5-100 such that the moieties -CO-Z' form the hydrophilic "arms" of the random graft or comb copolymers and the remaining units form the hydrophobic backbone which also contains the cross-linking moieties L.

14. A method according to claim 13 wherein e is from 0.1 to 0.5, f is from 0.01 to 0.4 and g is from 0.1 to 0.9

15. A method according to any of claims 4 to 12 wherein the polymeric stabilizer is a block copolymer comprised of a hydrophilic block, which in turn is comprised of a hydrophile, which is a residue of the initiator of formula (II) as defined in claim 6 and/or a hydrophilic unit (-CH₂CR¹X-) as defined in claim 4, said hydrophilic block being adjoined to a hydrophobic block which is comprised of randomly or sequentially copolymerised units (-CH₂CR₂Y-) as defined in claim 4 and cross-linking units (-CH₂CH₂CRL-) as defined in claim 4.

16. A method according to claim 15 wherein the value of f+g is from 0.2 to 1.0 and the ratio of g : f is from 1: 2 to 1:10

17. A method according to any of the preceding claims wherein
(a) when the reactive functional group on the polymeric stabiliser is hydroxyl or thiol, the substance dissolved or suspended in the aqueous phase and capable of undergoing a cross-linking reaction with the said functional groups on the polymeric stabiliser suitable reaction partners is an isocyanate, an ester, an epoxide, a divinylsulphone or a glycerol triglycidyl ether or
(b) when the reactive functional group on the polymeric stabiliser is -NHA wherein A is hydrogen or a C₁ to C4 alkyl group, the substance dissolved or suspended in the aqueous phase and capable of undergoing a cross-linking reaction with the said functional groups on the polymeric stabiliser is an isocyanate, an acetoacetoxy group, an aldehyde, an acrylate, a vinylsulphone, an epoxide, glycerol triglycidyl ether; glycerol propoxylate triglycidyl ether; trimethylolpropane triacrylate; trimethylolpropane propoxylate triacrylate; glutaric dialdehyde; 2-(acetoacetoxy) ethyl acrylate and 1,4-butandiol diacetoacetate or
(c) when the reactive functional group on the polymeric stabiliser is an acid reactive group, the substance dissolved or suspended in the aqueous phase and capable of undergoing a cross-linking reaction with the said functional groups on the polymeric stabiliser is an isocyanate, an aziridine or a carbodiimide.

18. A method according to claim 17 wherein the reactive functional group on the polymeric stabiliser is hydroxyl or thiol or -NHA and the substance dissolved or suspended in the aqueous phase and capable of undergoing a cross-linking reaction with the said functional groups on the polymeric stabiliser suitable reaction partners is an isocyanate wherein the isocyanate is selected from m-phenylene diisocyanate; 1-chloro-2,4-phenylene diisocyanate; 4,4'-methylenebis(phenyl isocyanate); 3,3'dimethyl-4,4'-biphenylene diisocyanate 4,4'-methylenebis(2-methylphenyl isocyanate); 3,3'dimethoxy-4,4'biphenylene diisocyanate; 2,4-tolylene diisocyanate; 2,6-tolylenediisocyanate; tetramethyl-4,4'-biphenylene diisocyanate; isophorone diisocyanate; hexane-1,6-diisocyanate;tetramethylene xylene diisocyanate; α,4-tolylene diisocyanate; tolylene 2,5-diisocyanate; 2,4,6-trimethyl-1,3-phenylene diisocyanate; poly(ethylene adipate) tolylene 2,4-diisocyanate terminated; poly(isophorone diisocyanate); poly(propylene glycol) tolylene 2,4-diisocyanate terminated; poly(1,4-butanediol) tolylene diisocyanate terminated; 1,8-diisocyanatooctane; poly(hexamethylene diisocyanate); poly(tolylene 2,4-diisocyanate); poly(tetrafluoroethylene oxide-co-difluoromethylene oxide) α,ω-diisocyanate; 1,4-diisocyanatobutane; 1,3-phenylene diisocyanate; 1,4-phenylene diisocyanate; trans-1,4-cyclohexylene diisocyanate; m-xylylene diisocyanate; α,α-dimethyl-α,4-phenylethyl diisocyanate; 4-bromo-6-methyl-1,3-phenylene diisocyanate; 4-chloro-6-methyl-1,3-phenylene diisocyanate; poly(1,4-butanediol) isophorone diisocyanate terminated; 3,3'-dimethyl-4,4'-biphenylene diisocyanate; and 1,3-bis(1-isocyanato-1-methylethyl)benzene.

19. A method according to any of claims 2 to 18 wherein the substance dissolved or suspended in the aqueous phase and capable of undergoing a cross-linking reaction is added to the aqueous phase after milling.

20. A method according to any of the preceding claims wherein the polymeric stabiliser is prepared by atom transfer radical polymerisation.

21. A particulate suspension comprising a liquid phase having suspended therein a solid substantially insoluble in said liquid phase wherein the suspension is stabilised by the reaction product of
(i) a polymeric stabiliser having a hydrophilic moiety and a hydrophobic moiety and comprising a plurality of vinylic monomers, not being exclusively of vinylic esters or of their hydrolysed products, at least some of which contain functional groups capable of undergoing cross-linking nucleophilic or condensation reactions and
(ii) one or more substances contained in the liquid phase capable of undergoing a cross-linking reaction with said functional groups;
wherein the ratio by weight of (a) the polymeric stabiliser prior to cross-linking to (b) the suspended solid is from 1 part of polymeric stabiliser to 200 parts of suspended solid to 1 part of polymeric stabiliser per 10 parts of suspended solid.

## Patentansprüche

1. Verfahren zur Erhöhung der Stabilität einer partikelförmigen Suspension, umfassend eine wässrige Phase, enthaltend im wesentlichen kein mischbares organisches Lösungsmittel, das hierin einen agrochemischen Feststoff suspendiert hat, der im wesentlichen in dieser wässrigen Phase unlöslich ist, das umfasst:
(i) Ausbildung eines polymeren Stabilisators mit einem hydrophilen Rest und einem hydrophoben Rest durch Polymerisieren einer Vielzahl an Vinylmonomeren, die nicht ausschließlich Vinylester oder deren hydrolisierte Produkte sind, von denen mindestens einige funktionale Gruppen enthalten, die in der Lage sind, Vernetzungsreaktionen einzugehen, und
(ii) Umsetzen dieses polymeren Stabilisators mit einer oder mehreren Substanzen, die in der wässrigen Phase enthalten sind (gelöst oder suspendiert), die in der Lage sind, eine Vernetzungsreaktion mit diesen funktionalen Gruppen auszuführen;
wobei das Gewichtsverhältnis von (a) dem polymeren Stabilisator vor der Vernetzung zu (b) der suspendierten Agrochemikalie von einem Teil des polymerischen Stabilisators zu 200 Teilen der suspendierten Agrochemikalie bis einem Teil des polymerischen Stabilisators je 10 Teile der suspendierten Agrochemikalie ist.

2. Verfahren gemäß Anspruch 1, wobei der Feststoff gemahlen ist oder in sonstiger Weise in Gegenwart der wässrigen Phase und des polymerischen Stabilisators vor Schritt (ii) dispergiert ist.

3. Verfahren gemäß Anspruch 1 oder Anspruch 2, wobei die Partikelgröße der suspendierten Agrochemikalie von 1 bis 10 µm ist.

4. Verfahren gemäß Anspruch 1, wobei der polymerische Stabilisator durch die allgemeine Formel (I) dargestellt wird: 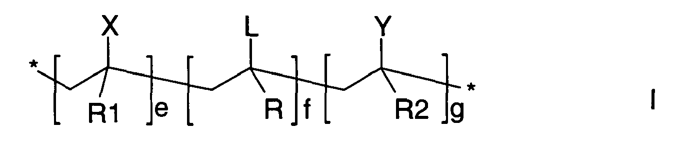 wobei ein * den Rest einer Initiatorgruppe und der andere * den Rest der Endgruppe darstellt; R1, R and R2 unabhängig voneinander H oder Methyl sind; X ein hydrophiler Rest ist; L ein Rest ist, der eine Vernetzungsgruppe enthält; Y ein hydrophober Rest ist; der Wert von e von 0 bis 0,8 reicht; der Wert von f von 0,01 bis 0,4 reicht und der Wert von g von 0,10 bis 0,90 reicht, und e+f+g gleich 1 ist, mit der Maßgabe, dass, wenn e 0 ist, * den Rest eines hydrophilen Initiators darstellt.

5. Verfahren gemäß Anspruch 4, wobei der Wert e von 0,005 bis 0,35 ist, der Wert f von 0,05 bis 0,4 ist.

6. Verfahren gemäß Anspruch 4 oder 5, wobei * den Rest eines hydrophilen Initiators darstellt, und dieser Rest' die Formel hat 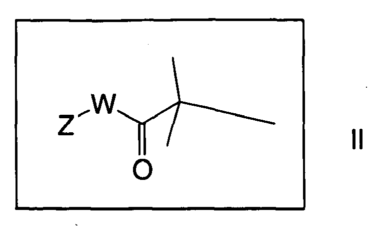 wobei Z eine hydrophile Gruppe ist, ausgewählt aus C₁ bis C₄-Alkoxypolyethylenglycol, Phenyloxypolyethylenglycol, Poly(acrylamid), Poly(vinylpyrrolidon) oder Poly(methylvinylether) und -W- -O- oder -NA- ist, wobei A Wasserstoff oder eine C₁ bis C₄-Alkylgruppe ist.

7. Verfahren gemäß irgendeinem der Ansprüche 4 bis 6, wobei die Einheiten E, F und G, wie hier definiert, einem oder Monomeren entsprechen, die ein Methacrylat-, ein Acrylat- oder ein substituiertes Styrolmonomer sind.

8. Verfahren gemäß Anspruch 7, wobei -X ein hydrophiler Rest X' ist oder trägt, ausgewählt aus -SO₃⁻, Polyethylenglycol, ggf. endständig mit C₁-C₄-Alkyl verkappt; -COOH oder ein Salz davon; Carboxybetain; Sulfobetain und ein quarternäres Ammoniumsalz -N⁺R³₃C-, wobei jedes R³ unabhängig von einander H oder C₁-C₄-Alkyl oder -CH₂CH₂OH ist und worin -L eine Vernetzungsgruppe L' ist oder trägt, ausgewählt aus -OH; -SH; -NHA, wobei A Wasserstoff oder C₁-C₄-Alkyl ist; und -COOH oder ein Salz davon und Y einen hydrophoben Rest Y' trägt oder einer ist, ausgewählt aus -CO-O-(-Si(CH₃)₂O-)n-H, worin n von 3 bis 20 ist; -CO-O-Polypropylenglycol; -CO-O-A, worin A eine C₁-C₄-Alkylgruppe, Cycloalkylgruppe, Alkylcycloalkylgruppe, Aralkylgruppe oder Alkylarylgruppe ist; und -CONHB, worin B eine C₅-C₁₂-Alkylgruppe ist.

9. Verfahren gemäß irgendeinem der Ansprüche 4 bis 8, worin -X ausgewählt ist aus den Gruppen 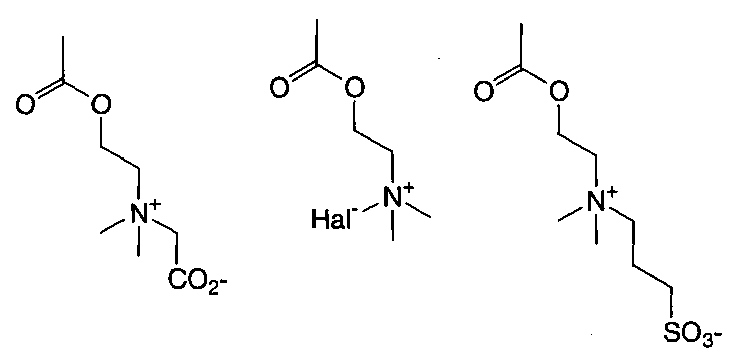 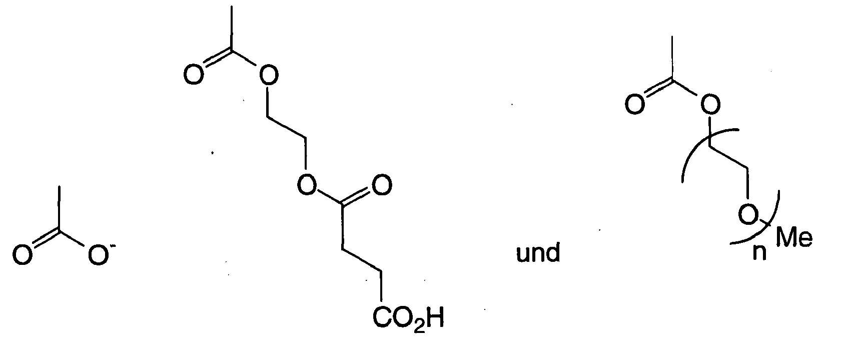 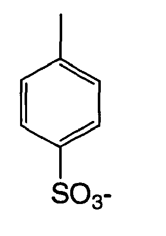 worin n den durchschnittlichen Polymerisierungsgrad der Polyethylenglycolkette angibt, und 5 bis 100 ist.

10. Verfahren gemäß irgendeinem der Ansprüche 4 bis 9, worin -L ausgewählt ist aus den Gruppen 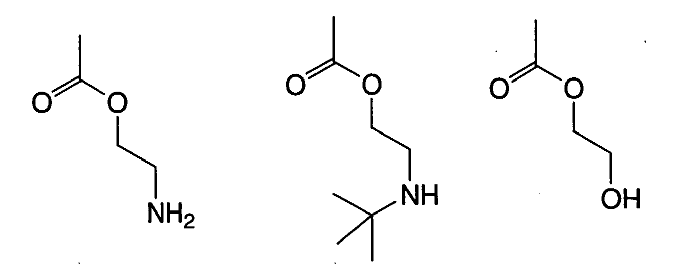 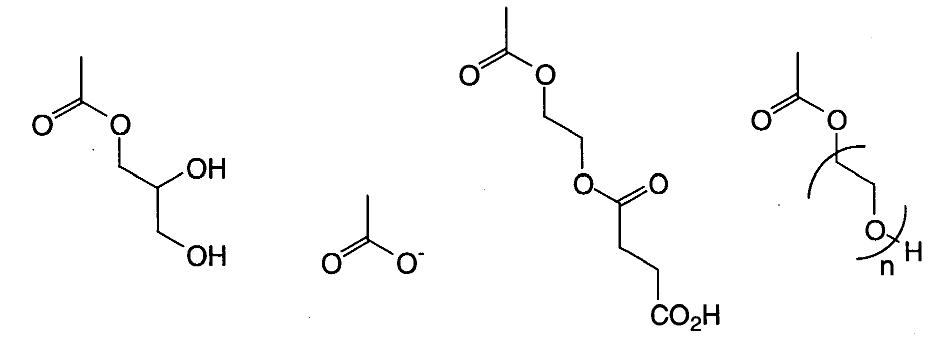 worin n den Polymerisierungsgrad des Propylenglycols angibt und von 5 bis 50 reicht.

11. Verfahren gemäß irgendeinem der Ansprüche 4 bis 10, worin -Y ausgewählt ist aus den Gruppen 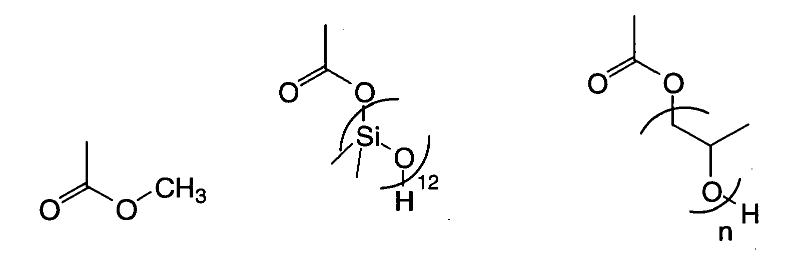 worin n den Polymerisierungsgrad des Propylenglycols angibt und von 5 bis 50 beträgt.

12. Verfahren gemäß Anspruch 1, worin der polymere Stabilisator einen hydrophilen Rest, einen hydrophoben Rest und einen Rest hat, welcher reaktive oder vernetzende Fähigkeit bezogen auf eine oder mehrere Substanzen hat, die in der wässrigen Phase der Suspension enthalten ist, und in der Lage ist, eine Vernetzungsreaktion mit dieser funktionalen Gruppe durchzuführen, und worin der hydrophile Rest von einem oder mehreren Vinylmonomeren stammt, die ausgewählt sind aus 2-(N,N-Dimethyl-N-(2-methacryloxyethyl)ammonium)ethanolsäure, 2-(Trimethylammonium)ethylmethacrylatsalz ; 3-(N,N-Dimethyl-N-(2-methacryloxyethyl)ammonium)propyl-sulphonsäure, dem Natriumsalz von Methacrylsäure, Mono-2-(methacryloyloxy)ethylsuccinat, Mono-methoxypoly(ethylenglycol)mono-methacrylat, Styrol-4-sulfonsäure, 4-Vinylbenzyltrimethylammoniumchlorid, 2-N-morpholinoethyl, 2-Methacryloxyethylphosphonatmethacrylat, 2-Acrylamido-2-methylpropansulphonsäure, Mono-methoxy-PEO-(meth)acrylat, Acrylamid, Vinylpyrrolidon, 2-Sulphoethylmethacrylat, 2-Acrylamido-2-methylpropasulphonsäure, quarternäre Salze von Dimethylaminoethylmethacrylat (DMAEMA) und von Dimethylaminoethylacrylat oder DMAEMA bei sauren pH-Werten, 2-(Trimethylammonium)ethylmethacrylatiodid, 2-(N,N-dimethyl-N-(2-methacryloxyethyl)ammonium)ethanolsäure oder Styrol-4-sulfonsäure und worin der Rest, der reaktive oder Vernetzungsfähigkeit besitzt, von einem oder mehreren Vinylmonomeren stammt, ausgewählt aus 2-Aminoethylmethacrylat, 2-(Tert-butylamino)ethylmethacrylat, 2-Hydroxyethylmethacrylat, 2,3-Dihydroxypropylmethacrylat, dem Natriumsalz von Methacrylsäure, Mono-2-(methacryloyloxy)ethylsuccinat, Poly(propylenglycol)mono-methacrylat, 2-Aminoethylmethacrylathydrochlorid, N-(3-Aminopropyl)methacrylamidhydrochlorid, 4-Aminostyrol, 2-(Iso-propylamino)ethylstyrol, 4-N-(Vinylbenzyl)aminobuttersäure, 3-(N-Styrylmethyl-2-aminoethylamino)-propyltrimethyoxysilanhydrochlorid, N-(3-Methacryloxy-2-hydroxypropyl)-3-aminopropyltriethoxysilan; 2-Methoxy-4-vinylphenol, 4-Vinylbenzylalkohol; 4-Vinylphenol, 2,6-Dihydroxymethyl-4-methoxystyrol, 3,5-Dimethoxy-4-hydroxystyrol, 2-Hydroxy-3-methacryloxypropyltrimethylammoniumchlorid, 3-Chlor-2-hydroxypropylmethacrylat, 3-Hydroxypropylmethacrylat, 2-Hydroxy-3-phenoxypropylmethacrylat, Diethylenglycolmono-methacrylat, 2-Methacryloxyethylglucosid, Sorbitolmethacrylat, Caprolacton-2-methacryloxyethylester, 4-hydroxybutylmethacrylat, 2-Hydroxypropylmethacrylat, Acrylsäure, Beta-carboxyethylacrylsäure, 4-Vinylbenzoesäure, 4-((3-Methacryloxy)propoxy)benzoesäure, Mono-(2-(methacryloxy)ethyl)phthalatitaconsäure oder iminierte Derivate dieser Monomere, sobald sie polymerisiert sind, Glycidylmethacrylat nach Umwandlung in reaktive funktionale Gruppen durch Umsetzung mit Alkylaminen, und worin der hydrophobe Rest von einem oder mehreren Vinylmonomeren stammt, ausgewählt aus Methylmethacrylatpoly(dimethylsiloxan)mono-methacrylat, Poly(propylenglycol)mono-methacrylat.

13. Verfahren gemäß irgendeinem der Ansprüche 4 bis 12, worin der polymere Stabilisator ein Zufalls-Propf- oder Kammcopolymer mit einem hydrophoben Rückgrat und hydrophilen Armen ist, worin R¹ -H oder Methyl ist und -X eine Gruppe -CO-Z' ist, worin Z' Methoxy(polyethylenglycol) mit einem Polymerisierungsgrad (DPn) von 5 bis 100 ist, so dass die Reste -CO-Z' die hydrophilen "Arme" des Zufallspropfes oder Kammpolymers bilden und die restlichen Einheiten das hydrophobe Rückgrat bilden, welches ebenfalls die vernetzten L-Reste enthält.

14. Verfahren gemäß Anspruch 13, worin e von 0,1 bis 0,5 ist, f von 0,01 bis 0,4 ist und g von 0,1 bis 0,9 ist.

15. Verfahren gemäß irgendeinem der Ansprüche 4 bis 12, worin der polymere Stabilisator ein Blockcopolymer ist, das von einem hydrophilen Block umfasst ist, welcher wiederum von einem Hydrophil umfasst ist, welcher ein Rest des Initiators der Formel (II), wie in Anspruch 6 definiert ist, und/oder eine hydrophile Einheit (-CH₂CR¹X-) wie in Anspruch 4 definiert, wobei dieser hydrophile Block an einen hydrophoben Block anschließt, welcher zufallsgemäße oder sequentiell copolymerisierte Einheiten (-CH₂CR₂Y-) umfasst, wie in Anspruch 4 definiert, und aus Vernetzungseinheiten (-CH₂CH₂CRL-), wie in Anspruch 4 definiert.

16. Verfahren gemäß Anspruch 15, worin der Wert von f+g von 0,2 bis 1,0 reicht, und das Verhältnis von g:f von 1:2 bis 1:10 beträgt.

17. Verfahren gemäß irgendeinem der vorhergehenden Ansprüche, worin
(a) wenn die reaktive funktionale Gruppe des polymerischen Stabilisators Hydroxyl oder Thiol ist, die in der wässrigen Phase gelöste oder suspendierte und zur Ausführung einer Vernetzungsreaktion mit den funktionalen Gruppen des polymerischen Stabilisators fähige Substanz geeignete Reaktionspartner ein Isocyanat, ein Ester, ein Epoxyd, ein Divinylsulfon oder ein Glyceroltriglycidylether ist, oder
(b) wenn die reaktive funktionale Gruppe oder der polymerische Stabilisator -NHA ist, worin A Wasserstoff oder eine C₁-C₄-Alkylgruppe ist, die in der wässrigen Phase gelöste oder suspendierte und zum Durchlaufen einer Vernetzungsreaktion mit diesen funktionalen Gruppen am polymerischen Stabilisator fähige Substanz ein Isocyanat, eine Acetoacetoxygruppe, ein Aldehyd, ein Acrylat, ein Vinylsulfon, ein Epoxyd, Glyceroltriglycidylether; Glycerolpropoxylattriglycidylether, Trimethylolpropantriacrylat; Trimethylolpropanpropoxylattriacrylat; Glutardialdehyd; 2-(Acetoacetoxy)ethylacrylat und 1,4-Butanoldiacetoacetat ist, oder
(c) wenn die reaktive funktionale Gruppe des polymerischen Stabilisators eine säurereaktive Gruppe ist, die in der wässrigen Phase gelöste oder suspendierte und zur Vernetzungsreaktion mit diesen funktionalen Gruppen am polymerischen Stabilisator fähige Substanz ein Isocyanat, ein Aziridin oder ein Carbodiimid ist.

18. Verfahren gemäß Anspruch 17, worin die reaktive funktionale Gruppe am polymerischen Stabilisator Hydroxyl oder Thiol oder -NHA ist und die in der wässrigen Phase gelöste oder suspendierte und zum Durchführen einer Vernetzungsreaktion mit diesen funktionalen Gruppen am polymerischen Stabilisator geeigneten Reaktionspartner ein Isocyanat ist, worin das Isocyanat ausgewählt ist aus m-Phenylendiisocyanat; 1-Chlor-2,4-phenylendiisocyanat; 4,4'-Methylenbis(phenylisocyanat); 3,3'Dimethyl-4,4'-biphenylendiisocyanat 4,4'-methylenbis(2-methylphenylisocyanat); 3,3'dimethoxy-4,4'biphenylendiisocyanat; 2,4-Tolylendiisocyanat; 2,6-tolylendiisocyanat; Tetramethyl-4,4'-biphenylendiisocyanat; Isophorondiisocyanat; Hexan-1,6-diisocyanat; Tetramethylenxyloldiisocyanat; α,4-Tolylendiisocyanat; Tolylen-2,5-diisocyanat; 2,4,6-Trimethyl-1,3-phenylendiisocyanat; Poly(ethylenadipat)tolylen 2,4-diisocyanat-terminiert; Poly(isophorondiisocyanat); Poly(propylenglycol)tolylen 2,4-diisocyanat-terminiert; Poly(1,4-butanediol) tolylendiisocyanat-terminiert; 1,8-Diisocyanatooctan; Poly(hexamethylendiisocyanat); Poly(tolylen 2,4-diisocyanat); Poly(tetrafluoroethylenoxid-co-difluoromethylenoxid)α,ω-diisocyanat; 1,4-Diisocyanatobutan; 1,3-Phenylendiisocyanat; 1,4-Phenylendiisocyanat; Trans-1,4-cyclohexylendiisocyanat; m-Xylylendiisocyanat; α,α-dimethyl-α,4-phenylethyldiisocyanat; 4-Brom-6-methyl-1,3-phenylendiisocyanat; 4-Chlor-6-methy-1,3-phenylendiisocyanat; poly(1,4-butanediol)isophorondiisocyanat-terminiert; 3,3'-dimethyl-4,4'-biphenylendiisocyanat; und 1,3-Bis(1-isocyanato-1-methylethyl)benzol.

19. Verfahren gemäß irgendeinem der Ansprüche 2 bis 18, worin die Substanz, die in der wässrigen Phase gelöst oder suspendiert ist und in der Lage ist, eine Vernetzungsreaktion einzugehen, zu der wässrigen Phase nach dem Mahlen hinzugegeben wird.

20. Verfahren gemäß irgendeinem der vorhergehenden Ansprüche, wobei der polymerische Stabilisator durch eine Atomtransferradikalpolymerisierung hergestellt wird.

21. Partikelförmige Suspension umfassend eine flüssige Phase mit darin suspendiertem Feststoff, der im wesentlichen in dieser flüssigen Phase unlöslich ist, worin die Suspension durch das Reaktionsprodukt stabilisiert wird aus
(i) einem polymerischen Stabilisator mit einem hydrophilen Rest und einem hydrophoben Rest und umfassend eine Vielzahl an Vinylmonomeren, die nicht ausschließlich Phenylester oder ihre hydrolisierten Produkte sind, von denen mindestens einige funktionale Gruppen enthalten, die in der Lage sind, nukleophil zu vernetzen oder Kondensationsreaktionen zu durchlaufen und
(ii) eine oder mehrere Substanzen, die in der Flüssigphase enthalten sind, die in der Lage sind, eine Vernetzungsreaktion mit diesen funktionalen Gruppen durchzuführen;
worin das Gewichtsverhältnis von (a) des polymerischen Stabilisators vor der Vernetzung zu (b) dem suspendierten Feststoff von einem Teil des polymerischen Stabilisators bis 200 Teile des suspendierten Feststoffs bis ein Teil des polymerischen Stabilisators je 10 Teile des suspendierten Feststoffs reicht.

## Revendications

1. Procédé d'amélioration de la stabilité d'une suspension de particules comprenant une phase aqueuse ne contenant essentiellement pas de solvant organique miscible, ayant en suspension en son sein un solide de produit agrochimique essentiellement insoluble dans ladite phase aqueuse, qui comprend les étapes consistant :
(i) à former un stabilisant polymère ayant un groupement hydrophile et un groupement hydrophobe en polymérisant plusieurs monomères vinyliques, n'étant pas exclusivement des esters vinyliques ou leurs produits hydrolysés, dont au moins certains contiennent des groupes fonctionnels susceptibles de subir des réactions de réticulation, et
(ii) à faire réagir ledit stabilisant polymère avec une ou plusieurs substances contenues (dissoutes ou en suspension) dans la phase aqueuse susceptibles de subir une réaction de réticulation avec lesdits groupes fonctionnels ; dans lequel le rapport en poids (a) du stabilisant polymère avant réticulation sur (b) le produit agrochimique en suspension va de 1 partie de stabilisant polymère pour 200 parties de produit agrochimique en suspension à 1 partie de stabilisant polymère pour 10 parties de produit agrochimique en suspension.

2. Procédé selon la revendication 1, dans lequel le solide est broyé ou autrement dispersé en présence de la phase aqueuse et du stabilisant polymère avant l'étape (ii).

3. Procédé selon la revendication 1 ou 2, dans lequel la taille des particules du produit agrochimique en suspension va de 1 à 10 microns.

4. Procédé selon la revendication 1, dans lequel le stabilisant polymère est représenté par la formule générale (I) : 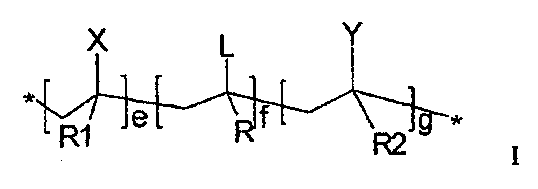 dans laquelle une * représente le résidu d'un groupe initiateur et l'autre * représente le résidu d'un groupe terminateur ; R1, R et R2 sont indépendamment H ou un méthyle ; X est un groupement hydrophile ; L est un groupement contenant un groupe de réticulation ; Y est un groupement hydrophobe ; la valeur de e va de 0 à 0,8 ; la valeur de f va de 0,05 à 0,4 et la valeur de g va de 0,10 à 0,90 et e + f + g est égal à 1, à condition que lorsque e est égal à 0, * représente le résidu d'un initiateur hydrophile.

5. Procédé selon la revendication 4, dans lequel la valeur de e va de 0,005 à 0,35, la valeur de f va de 0,01 à 0,4.

6. Procédé selon la revendication 4 ou 5, dans lequel * représente le résidu d'un initiateur hydrophile, et ledit résidu a la formule : 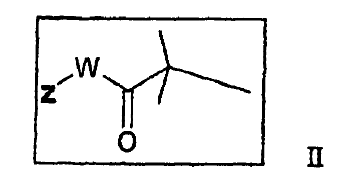 dans laquelle Z est un groupe hydrophile choisi parmi un (alcoxy en C₁ à C₄) polyéthylène glycol, le phényloxy polyéthylène glycol, le poly (acrylamide), la poly (vinylpyrrolidone) ou le poly (éther méthylvinylique) et -W- est -O- ou -NA- où A est l'hydrogène ou un groupe alkyle en C₁ à C₄.

7. Procédé selon l'une quelconque des revendications 4 à 6, dans lequel les unités E, F et G telles que définies ici correspondent à un ou des monomères tels qu'un monomère de méthacrylate, d'acrylate ou de styrène substitué.

8. Procédé selon la revendication 7, dans lequel -X est ou porte un groupement hydrophile X' choisi parmi -SO₃⁻ ; un polyéthylène glycol facultativement coiffé aux extrémités par un alkyle en C₁ à C₄ ; -COOH ou un sel de celui-ci ; la carboxybétaïne ; la sulfobétaïne ; et un sel d'ammonium quaternaire -N⁺R³₃C⁻ dans lequel chaque R³ est indépendamment H ou un alkyle en C₁ à C₄ ou -CH₂CH₂OH et dans lequel -L est ou porte un groupe de réticulation L' choisi parmi -OH ; -SH ; -NHA où A est l'hydrogène ou un alkyle en C₁ à C₄ ; et -COOH ou un sel de celui-ci, et -Y est ou porte un groupement hydrophobe Y' choisi parmi -CO-O-(-Si(CH₃)₂O-)ₙH où n va de 3 à 20 ; -CO-O- polypropylène glycol ; -CO-O-A où A est un groupe alkyle en C₁ à C₁₂, un groupe cycloalkyle, un groupe alkylcycloalkyle, un groupe aralkyle ou un groupe alkylaryle ; et -CONHB où B est un groupe alkyle en C₅ à C₁₂.

9. Procédé selon l'une quelconque des revendications 4 à 8, dans lequel -X est choisi parmi les groupes 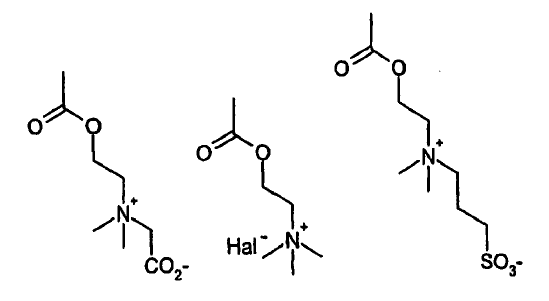 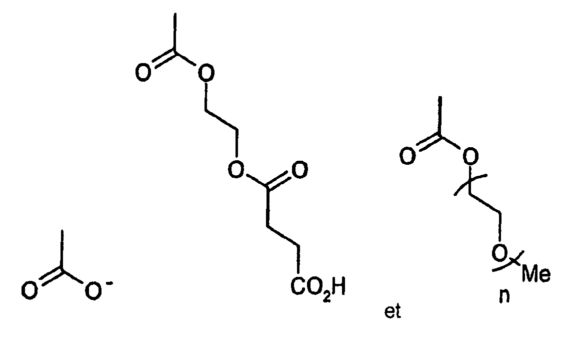 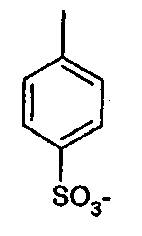 où n indique le degré moyen de polymérisation de la chaîne du polyéthylène glycol et va de 5 à 100.

10. Procédé selon l'une quelconque des revendications 4 à 9, dans lequel -L est choisi parmi les groupes 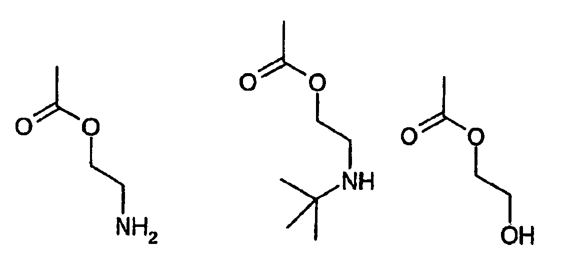 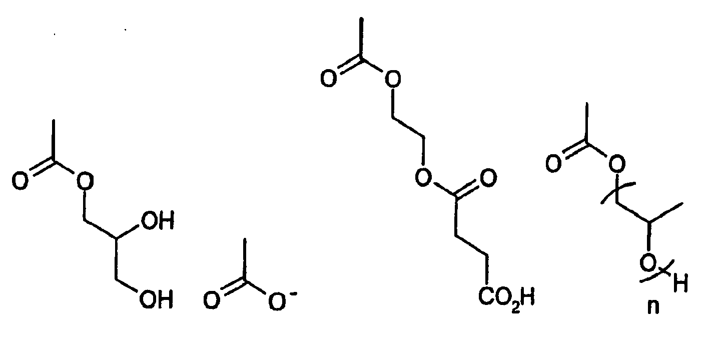 où n indique le degré de polymérisation du propylène glycol et va de 5 à 50.

11. Procédé selon l'une quelconque des revendications 4 à 10, dans lequel -Y est choisi parmi les groupes 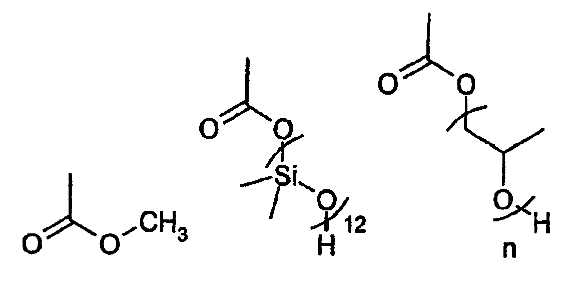 où n indique le degré de polymérisation du propylène glycol et va de 5 à 50.

12. Procédé selon la revendication 1, dans lequel le stabilisant polymère possède un groupement hydrophile, un groupement hydrophobe et un groupement qui possède une capacité de réaction ou de réticulation par rapport à l'une ou plusieurs substances contenues dans la phase aqueuse de la suspension et susceptibles de subir une réaction de réticulation avec ledit groupe fonctionnel, et dans lequel le groupement hydrophile provient d'un ou plusieurs monomères vinyliques choisis parmi l'acide 2-(N,N-diméthyl-N-(2-méthacryloxyéthyle) ammonium) éthanoïque, le sel de méthacrylate de 2-(triméthylammonium) éthyle, l'acide 3-(N,N-diméthyl-N-(2-méthacryloxyéthyle) ammonium) propyl-sulfonique, le sel de sodium de l'acide méthacrylique, le succinate de mono-2-(méthacryloyloxy) éthyle, le mono-méthacrylate de mono-méthoxy poly (éthylène glycol), l'acide styrène-4-sulfonique, le chlorure de 4-vinylbenzyle triméthylammonium, le 2-N-morpholinoéthyle, le méthacrylate de 2-méthacryloxyéthylphosphonate, l'acide 2-acrylamido-2-méthylpropane sulfonique, le mono-méthoxy-PEO-(méth) acrylate, l'acrylamide, la vinylpyrrolidone, le méthacrylate de 2-sulfoéthyle, l'acide 2-acrylamido-2-méthylpropane sulfonique, les sels quaternaires de méthacrylate de diméthylaminoéthyle (DMAEMA) et d'acrylate de diméthylaminoéthyle ou DMAEMA à des pH acides, l'iodure de méthacrylate de 2-(triméthylammonium) éthyle, l'acide 2-(N,N-diméthyl-N-(2-méthacryloxyéthyle) ammonium) éthanoïque, ou l'acide styrène-4-sulfonique,
et dans lequel le groupement qui possède une capacité de réaction ou de réticulation provient d'un ou plusieurs monomères vinyliques choisis parmi le méthacrylate de 2-aminoéthyle, le méthacrylate de 2-(tert-butylamino) éthyle, le méthacrylate de 2-hydroxyéthyle, le méthacrylate de 2,3-dihydroxypropyle, le sel de sodium de l'acide méthacrylique, le succinate de mono-2-(méthacryloyloxy) éthyle, le mono-méthacrylate de poly (propylène glycol), le chlorhydrate de méthacrylate de 2-aminoéthyle, le chlorhydrate de N-(3-aminopropyle) méthacrylamide, le 4-aminostyrène, le 2-(isopropylamino) éthylstyrène, l'acide 4-N-(vinylbenzyle) aminobutyrique, le chlorhydrate de 3-(N-styrylméthyl-2-aminoéthytamino)-propyltriméthoxysilane, le N-(3-méthacryloxy-2-hydroxypropyle)-3-aminopropyltriéthoxysilane, le 2-méthoxy-4-vinylphénol, l'alcool 4-vinylbenzylique, le 4-vinylphénol, le 2,6-dihydroxyméthyl-4-méthoxystyrène, le 3,5-diméthoxy-4-hydroxystyrène, le chlorure de 2-hydroxy-3-méthacryloxypropyle triméthylammonium, le méthacrylate de 3-chloro-2-hydroxypropyle, le méthacrylate de 3-hydroxypropyle, le méthacrylate de 2-hydroxy-3-phénoxypropyle, le mono-méthacrylate de diéthylène glycol, le glucoside de 2-méthacryloxyéthyle, le méthacrylate de sorbitol, l'ester de caprolactone 2-méthacryloxyéthyle, le méthacrylate de 4-hydroxybutyle, le méthacrylate de 2-hydroxypropyle, l'acide acrylique, l'acide bêta-carboxyéthylacrylique, l'acide 4-vinylbenzoïque, l'acide 4-((3-méthacryloxy) propoxy) benzoïque, l'acide mono-(2-(méthacryloxy) éthyle) phtalate itaconique, ou les dérivés iminés de ces monomères une fois polymérisés, le méth (acrylate) de glycidyle suivant la conversion en groupes fonctionnels réactifs par réaction avec des alkylamines,
et dans lequel le groupement hydrophobe provient d'un ou plusieurs monomères vinyliques choisis parmi le mono-méthacrylate de poly (diméthylsiloxane) de méthacrylate de méthyle, le mono-méthacrylate de poly (propylène glycol).

13. Procédé selon l'une quelconque des revendications 4 à 12, dans lequel le stabilisant polymère est un copolymère statistique greffé ou à structure en peigne ayant un squelette hydrophobe et des bras hydrophiles, dans lequel R¹ est -H ou un méthyle et -X est un groupe -CO-Z' où Z' est un méthoxy-(polyéthylène glycol) ayant un degré de polymérisation (DPn) de 5 à 100 tel que les groupements -CO-Z' forment les « bras » hydrophiles des copolymères statistiques greffés ou à structure en peigne et les unités restantes forment le squelette hydrophobe qui contient également les groupements de réticulation L.

14. Procédé selon la revendication 13, dans lequel e va de 0,1 à 0,5, f va de 0,01 à 0,4 et g va de 0,1 à 0,9.

15. Procédé selon l'une quelconque des revendications 4 à 12, dans lequel le stabilisant polymère est un copolymère séquencé constitué d'une séquence hydrophile, qui est à son tour constituée d'un hydrophile, qui est un résidu de l'initiateur de formule (II) tel que défini dans la revendication 6 et / ou une unité hydrophile (-CH₂CR¹X-) telle que définie dans la revendication 4, ladite séquence hydrophile étant contiguë à une séquence hydrophobe qui est constituée d'unités copolymérisées de façon aléatoire ou séquentielle (-CH₂CR₂Y-) telles que définies dans la revendication 4 et d'unités de réticulation (-CH₂CH₂CRL-) telles que définies dans la revendication 4.

16. Procédé selon la revendication 15, dans lequel la valeur de f + g va de 0,2 à 1,0 et le rapport de g : f va de 1 : 2 à 1 : 10.

17. Procédé selon l'une quelconque des revendications précédentes, dans lequel
(a) lorsque le groupe fonctionnel réactif sur le stabilisant polymère est un hydroxyle ou un thiol, la substance dissoute ou en suspension dans la phase aqueuse et susceptible de subir une réaction de réticulation avec lesdits groupes fonctionnels sur les partenaires réactionnels appropriés du stabilisant polymère est un isocyanate, un ester, un époxyde, une divinylsulfone ou un éther triglycidylique de glycérol, ou
(b) lorsque le groupe fonctionnel réactif sur le stabilisant polymère est -NHA où A est l'hydrogène ou un groupe alkyle en C₁ à C₄, la substance dissoute ou en suspension dans la phase aqueuse et susceptible de subir une réaction de réticulation avec lesdits groupes fonctionnels sur le stabilisant polymère est un isocyanate, un groupe acétoacétoxy, un aldéhyde, un acrylate, une vinylsulfone, un époxyde, l'éther triglycidylique de glycérol; l'éther triglycidylique de propoxylate de glycérol; le triacrylate de triméthylolpropane ; le triacrylate de propoxylate de triméthylolpropane ; le dialdéhyde glutarique ; l'acrylate de 2-(acétoacétoxy) éthyle et le diacétoacétate de 1,4-butane diol, ou
(c) lorsque le groupe fonctionnel réactif sur le stabilisant polymère est un groupe réactif acide, la substance dissoute ou en suspension dans la phase aqueuse et susceptible de subir une réaction de réticulation avec lesdits groupes fonctionnels sur le stabilisant polymère est un isocyanate, une aziridine ou un carbodiimide.

18. Procédé selon la revendication 17, dans lequel le groupe fonctionnel réactif sur le stabilisant polymère est un hydroxyle ou un thiol ou -NHA et la substance dissoute ou en suspension dans la phase aqueuse et susceptible de subir une réaction de réticulation avec lesdits groupes fonctionnels sur les partenaires réactionnels appropriés du stabilisant polymère est un isocyanate, dans lequel l'isocyanate est choisi parmi le diisocyanate de m-phénylène ; le diisocyanate de 1-chloro-2,4-phénylène ; le bis (phénylisocyanate) de 4,4'-méthylène; le diisocyanate de 3,3'-diméthyl-4,4'-biphénylène; le bis (2-méthylphénylisocyanate) de 4,4'-méthylène; le diisocyanate de 3,3'-diméthoxy-4,4'-biphénylène; le diisocyanate de 2,4-tolylène; le diisocyanate de 2,6-tolylène; le diisocyanate de tétraméthyl-4,4'-biphénylène; le diisocyanate d'isophorone; l'hexane-1,6-diisocyanate; le diisocyanate de tétraméthylène xylène; le diisocyanate de α,4-tolylène; le 2,5-diisocyanate de tolylène; le diisocyanate de 2,4,6-triméthyl-1,3-phénylène; le poly (éthylène adipate) terminé par un 2,4-diisocyanate de tolylène ; le poly (isophorone diisocyanate) ; le poly (propylène glycol) terminé par un 2,4-diisocyanate de tolylène ; le poly (1,4-butane diol) terminé par un diisocyanate de tolylène ; le 1,8-diisocyanatooctane ; le poly (hexaméthylène diisocyanate) ; le poly (tolylène 2,4-diisocyanate) ; le α,ω-diisocyanate de poly ((oxyde de tétrafluoroéthylène) -co- (oxyde de difluorométhylène)) ; le 1,4-diisocyanatobutane ; le diisocyanate de 1,3-phénylène ; le diisocyanate de 1,4-phénylène ; le diisocyanate de trans-1,4-cyclohexylène ; le diisocyanate de m-xylylène ; le diisocyanate de α,α-diméthyl-α,4-phényléthyle ; le diisocyanate de 4-bromo-6-méthyl-1,3-phénylène ; le diisocyanate de 4-chloro-6-méthyl-1,3-phénylène ; le poly (1,4-butane diol) terminé par un diisocyanate d'isophorone ; le diisocyanate de 3,3'-diméthyl-4,4'-biphénylène ; et le 1,3-bis (1-isocyanato-1-méthyléthyle) benzène.

19. Procédé selon l'une quelconque des revendications 2 à 18, dans lequel la substance dissoute ou en suspension dans la phase aqueuse et susceptible de subir une réaction de réticulation est ajoutée à la phase aqueuse après broyage.

20. Procédé selon l'une quelconque des revendications précédentes, dans lequel le stabilisant polymère est préparé par polymérisation radicalaire par transfert d'atome.

21. Suspension de particules comprenant une phase liquide ayant en suspension en son sein un solide essentiellement insoluble dans ladite phase liquide, dans laquelle la suspension est stabilisée par le produit de la réaction
(i) d'un stabilisant polymère ayant un groupement hydrophile et un groupement hydrophobe et comprenant plusieurs monomères vinyliques, n'étant pas exclusivement des esters vinyliques ou leurs produits hydrolysés, dont au moins certains contiennent des groupes fonctionnels susceptibles de subir des réactions nucléophiles de réticulation ou de condensation, et
(ii) d'une ou plusieurs substances contenues dans la phase liquide susceptibles de subir une réaction de réticulation avec lesdits groupes fonctionnels ;
dans laquelle le rapport en poids (a) du stabilisant polymère avant réticulation sur (b) le solide en suspension va de 1 partie de stabilisant polymère pour 200 parties de solide en suspension à 1 partie de stabilisant polymère pour 10 parties de solide en suspension.
